(19) Europäisches Patentamt European Patent Office Office européen des brevets

(11) **EP 3 666 841 B1**

(12) **EUROPEAN PATENT SPECIFICATION**

(45) Date of publication and mention of the grant of the patent:
**03.01.2024 Bulletin 2024/01**

(21) Application number: **18844779.1**

(22) Date of filing: **01.08.2018**

(51) International Patent Classification (IPC):
*C09J 153/02* *(2006.01)*    *B32B 25/04* *(2006.01)*
*B32B 27/00* *(2006.01)*    *B65D 65/40* *(2006.01)*
*C09J 7/35* *(2018.01)*    *C09J 7/38* *(2018.01)*
*C09J 11/06* *(2006.01)*

(52) Cooperative Patent Classification (CPC):
(C-Sets available)
**C09J 153/025; B32B 7/12; B32B 25/08;
B32B 25/14; B32B 27/08; B32B 27/18;
B32B 27/302; B32B 27/32; C08F 8/04; C09J 7/38;
C09J 9/00; C09J 153/02;** B32B 2250/24;
B32B 2250/246; B32B 2270/00;    (Cont.)

(86) International application number:
**PCT/JP2018/028876**

(87) International publication number:
**WO 2019/031354 (14.02.2019 Gazette 2019/07)**

(54) **COMPOSITION FOR PRESSURE-SENSITIVE ADHESIVE, MATERIAL FOR PRESSURE-SENSITIVE ADHESIVE, METHOD FOR FORMING PRESSURE-SENSITIVE ADHESIVE, PRESSURE-SENSITIVE ADHESIVE, MULTILAYERED FILM AND PACKAGE**

ZUSAMMENSETZUNG FÜR DRUCKEMPFINDLICHEN KLEBSTOFF, MATERIAL FÜR DRUCKEMPFINDLICHEN KLEBSTOFF, VERFAHREN ZUR HERSTELLUNG VON DRUCKEMPFINDLICHEM KLEBSTOFF, DRUCKEMPFINDLICHER KLEBSTOFF, MEHRSCHICHTIGER FILM UND VERPACKUNG

COMPOSITION POUR ADHÉSIF SENSIBLE À LA PRESSION, MATÉRIAU POUR ADHÉSIF SENSIBLE À LA PRESSION, PROCÉDÉ DE FORMATION D'UN ADHÉSIF SENSIBLE À LA PRESSION, FILM MULTICOUCHE D'ADHÉSIF SENSIBLE À LA PRESSION ET EMBALLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2017 JP 2017155498**

(43) Date of publication of application:
**17.06.2020 Bulletin 2020/25**

(73) Proprietor: **Asahi Kasei Kabushiki Kaisha**
**Tokyo 100-0006 (JP)**

(72) Inventors:
• **TANIGUCHI, Naoki**
**Tokyo 101-8101 (JP)**

• **TSUJI, Mikako**
**Tokyo 101-8101 (JP)**

(74) Representative: **Strehl Schübel-Hopf & Partner**
**Maximilianstrasse 54**
**80538 München (DE)**

(56) References cited:
WO-A1-2015/111675    WO-A1-2016/129532
JP-A- H0 711 219    JP-A- H11 323 295
JP-A- H11 323 295    JP-A- 2005 082 605
JP-A- 2007 284 464    JP-A- 2016 035 039

(52) Cooperative Patent Classification (CPC): (Cont.)
B32B 2274/00; B32B 2307/31; B32B 2307/7248;
B32B 2307/726; B32B 2307/732; B32B 2307/748;
B32B 2405/00; B32B 2439/70; B32B 2439/80;
B32B 2519/00; B32B 2553/00; C09J 2453/00

C-Sets
**C08F 8/04, C08F 297/044**

## Description

Technical Field

The present invention relates to the use of a composition in a particulate form for a pressure-sensitive adhesive of a multilayered film for resealing packaging.

Background Art

In recent years, packaging materials allowed to exhibit a resealing function by using a multilayered film including a pressure-sensitive adhesive layer have been proposed, and there has been a growing demand for extrusion moldable pressure-sensitive adhesives. In general, a method using a hot melt for a pressure-sensitive adhesive is known as a method for forming a pressure-sensitive adhesive layer (e.g., Patent Literature 1).

Citation List

Patent Literature

Patent Literature 1: National Publication of International Patent Application No. 2015-529715

JP H11 323295 A discloses a method for producing a surface protection film using a pressure-sensitive adhesive layer containing a block copolymer and a tackifying resin.

Summary of Invention

Technical Problem

In the case of forming a pressure-sensitive adhesive layer by extrusion-molding a hot melt for a pressure-sensitive adhesive, the hot melt for a pressure-sensitive adhesive is generally molded into pellets for use.

However, since hot melts for a pressure-sensitive adhesive which serve as a starting material of a pressure-sensitive adhesive have very large tack strength, it is difficult even to allow product forms to have a particle shape. Hence, a problem of such hot melts for a pressure-sensitive adhesive is difficult application to extrusion molding, which requires allowing the starting materials to have a particulate shape. Accordingly, possible methods include forming a pressure-sensitive adhesive by using a hot melt for a pressure-sensitive adhesive allowed to have a particle shape by the addition of a large amount of an antiblocking agent, or allowing a difficult-to-block hot melt for a pressure-sensitive adhesive having small tack strength to have a particle shape for use. Unfortunately, in the method including adding a large amount of an antiblocking agent, the hot melt for a pressure-sensitive adhesive is still easy to block due to high tack strength and very difficult to handle, while the method using a hot melt for a pressure-sensitive adhesive having small tack strength cannot provide sufficient tack strength.

An object of the present invention is to provide a composition for a pressure-sensitive adhesive being difficult to block, easy to handle, and capable of exhibiting high tack strength, wherein the pressure-sensitive adhesive is used in a multilayered film for resealing.

Solution to Problem

The present inventors diligently studied to solve the above problems, and have found that, if a composition in a particulate form including an integrated form of a thermoplastic elastomer and a tackifier satisfies predetermined conditions, the resulting pressure-sensitive adhesive can solve the above problems, and have completed the present invention.

Specifically, the present invention is set out in the appended claims.

Advantageous Effects of Invention

The present invention can provide the use of a composition in a particulate form for a pressure-sensitive adhesive of a multilayered film for resealing packaging.

Description of Embodiments

Hereinafter, embodiments of the present invention (hereinafter, referred to as "the present embodiments") will be described in detail. It is to be noted that the present invention is never limited to the following embodiments and can be implemented with various modifications within the scope of the claims.

[Composition for a pressure-sensitive adhesive]

The composition for a pressure-sensitive adhesive (hereinafter, also simply referred to as "composition for a pressure-sensitive adhesive") used in the present invention is a composition in a particulate form to be used for a pressure-sensitive adhesive, including an integrated form of at least one of thermoplastic elastomer A and at least one of tackifier (e.g., tackifier resin) B, wherein the ratio of the total weight of the tackifier to the total weight of the thermoplastic elastomer (the total weight of the tackifier/the total weight of the thermoplastic elastomer) in the composition is more than 1.5 and 3.0 or less. The composition for a pressure-sensitive adhesive used in the present inevention thus configured becomes difficult to block and easy to handle because of weakened tack strength.

In the present specification, the "integrated form" refers to a form of one solid as a whole. A form of a homogeneous molded body (pellets, beads, etc.) obtained by melt-kneading the thermoplastic elastomer A and the tackifier B is one of the preferred integrated forms, though the homogeneous state is not essential and these components in a state fused with each other as single substances are also possible.

The ratio of the total weight of the tackifier to the total weight of the thermoplastic elastomer (the total weight of the tackifier/the total weight of the thermoplastic elastomer) in the composition for a pressure-sensitive adhesive used in the present invention is more than 1.5 and 3.0 or less. The lower limit of the ratio of the total weight of the tackifier to the total weight of the thermoplastic elastomer (the total weight of the tackifier/the total weight of the thermoplastic elastomer) in the composition for a pressure-sensitive adhesive is preferably larger than 1.8, more preferably larger than 2.0, and further preferably larger than 2.2. The lower limit of the ratio of the total weight of the tackifier to the total weight of the thermoplastic elastomer in the range tends to weaken the tack strength of the composition for a pressure-sensitive adhesive and renders the composition for a pressure-sensitive adhesive difficult to block and easy to handle. The upper limit of the ratio of the total weight of the tackifier to the total weight of the thermoplastic elastomer (the total weight of the tackifier/the total weight of the thermoplastic elastomer) in the composition for a pressure-sensitive adhesive is preferably 3.0 or less, more preferably 2.8 or less, further preferably 2.6 or less, and still further preferably 2.4 or less. The upper limit of the ratio of the total weight of the tackifier to the total weight of the thermoplastic elastomer in the range tends to enhance the in-plane uniformity of the tack strength of a pressure-sensitive adhesive to be formed in extrusion because the composition for a pressure-sensitive adhesive tends to be homogeneously mixed with composition E described later in together extruding the first composition for a pressure-sensitive adhesive and the composition E by using an extruder, and tends to suppress the formation of fish eyes.

The composition for a pressure-sensitive adhesive according to the present invention includes an integrated form of at least one of thermoplastic elastomer A and at least one of tackifier B. One of the thermoplastic elastomers may be used singly, or two or more thereof may be used in combination. One of the tackifiers may be used singly, or two or more thereof may be used in combination. The composition for a pressure-sensitive adhesive according to the present invention may appropriately include components other than those described above (hereinafter, also referred to as "other components"). As the components other than those described above, a softener or the like can be used. The softener refers to a substance having a function to lower the hardness of a viscous adhesive composition and lower the viscosity. The softener is not limited, and examples thereof include oils; plasticizers; synthetic liquid oligomers; and mixtures thereof. From the viewpoint of lowering of viscosity, enhancement of tackiness and lowering of hardness for the viscous adhesive composition, oils may be used. The oil is not limited, and examples thereof include known paraffin process oils, naphthene process oils and aromatic process oils; and mixed oils thereof. One of the softeners may be used singly, or two or more thereof may be used in combination. In the case of applications to be used in food packaging materials, from the viewpoint of preventing the softener from being transferred to food due to the bleedout of the softener, the composition for a pressure-sensitive adhesive includes the softener at a ratio of preferably 8% by mass or less, more preferably 5% by mass or less, and further preferably 3% by mass or less based on the total amount of the composition for a pressure-sensitive adhesive, and still further preferably, substantially includes no softener. This phrase "substantially include no" means that even an inevitable amount of the softener to be mixed into production plants, materials, or the like is not excluded.

The ratio of the total weight of the thermoplastic elastomer based on the total weight of the composition for a pressure-sensitive adhesive used in the present invention is preferably 20% by mass or more and less than 40% by mass. The lower limit of the ratio is preferably 23% by mass or more, more preferably 26% by mass or more, and further preferably 28% by mass or more. The lower limit of the ratio in the range tends to enhance the in-plane uniformity of the tack strength of a pressure-sensitive adhesive to be formed in extrusion because the composition for a pressure-sensitive adhesive tends to be homogeneously mixed with composition E described later in together placing and extruding the composition for a pressure-sensitive adhesive and the composition E in an extruder, and tends to suppress the formation of fish eyes. The upper limit of the ratio is preferably 38% by mass or less, more preferably 36% by mass or less, and further preferably 34% by mass or less. The upper limit of the ratio in the range tends to weaken the tack strength of the composition for a pressure-sensitive adhesive and renders the composition for a pressure-sensitive adhesive difficult to block and easy to handle.

The ratio of the total weight of the tackifier based on the total weight of the composition for a pressure-sensitive adhesive used in the present embodiments is preferably more than 60% by mass and 80% by mass or less. The lower limit value of the ratio is preferably 62% by mass or more, more preferably 64% by mass or more, and further preferably 66% by mass or more. The lower limit of the ratio in the range tends to weaken the tack strength of the composition for a pressure-sensitive adhesive and renders the composition for a pressure-sensitive adhesive difficult to block and easy to handle. The upper limit of the ratio is preferably 78% by mass or less, more preferably 76% by mass or less, and further preferably 74% by mass or less. The upper limit of the ratio in the range tends to enhance the in-plane uniformity of the tack strength of a pressure-sensitive adhesive to be formed in extrusion because the composition for a pressure-sensitive adhesive tends to be homogeneously mixed with composition E described later in together placing and extruding the composition for a pressure-sensitive adhesive and the composition E in an extruder, and tends to suppress the formation of fish eyes.

The composition for a pressure-sensitive adhesive used in the present invention is in a particulate form. Here, the term "particulate" also includes a shape called pellet shape, bead shape, crumb shape, dense pellet shape, or the like and refers to particles having a substantially homogeneous size. The particles having a substantially homogeneous size tend to prevent sorting at the time of extrusion molding and facilitate forming a highly homogeneous pressure-sensitive adhesive.

From the viewpoint of being much more difficult to block and excellent in handleability, it is preferable that the composition for a pressure-sensitive adhesive used according to the present invention substantially have no tack performance. The phrase "substantially have no tack performance" refers to tack strength of 4.0 N/10 mm or smaller in the case that a layer consisting of this composition for a pressure-sensitive adhesive is formed on a base material and the tack strength is measured in accordance with "Method for measuring tack strength (Thermoplastic elastomer and each composition)" described later. From a similar viewpoint, the tack strength is preferably less than 2.0 N/10 mm, more preferably less than 1.0 N/10 mm, further preferably less than 0.8 N/10 mm, still further preferably less than 0.6 N/10 mm, furthermore preferably less than 0.4 N/10 mm, and further preferably less than 0.2 N/10 mm.

[Thermoplastic elastomer A]

From the viewpoint of easily exhibiting large tack strength, the thermoplastic elastomer A includes a polymer block (A) primarily comprising a vinyl aromatic monomer unit and a polymer block (B) primarily comprising a conjugated diene monomer unit. The "vinyl aromatic monomer unit" refers to a structure resulting from polymerization of one vinyl aromatic hydrocarbon compound, and the "conjugated diene monomer unit" refers to a structure resulting from polymerization of one conjugated diene compound.

The vinyl aromatic hydrocarbon compound is not limited, and examples thereof include alkylstyrenes such as styrene, $\alpha$-methylstyrene, p-methylstyrene and p-tert-butylstyrene; alkoxystyrenes such as p-methoxystyrene; and vinylnaphthalene. Among them, styrene is preferred for the vinyl aromatic hydrocarbon. One of the vinyl aromatic hydrocarbon compounds may be used singly, or two or more thereof may be used in combination.

The conjugated diene compound is not limited as long as the conjugated diene compound is a diolefin having a conjugated double bond, and examples thereof include 1,3-butadiene, 2-methyl-1,3-butadiene (isoprene), 2,3-dimethyl-1,3-butadiene, 1,3-pentadiene, and 1,3-hexadiene. Among them, 1,3-butadiene and isoprene are preferred for the conjugated diene compound. Use of 1,3-butadiene tends to provide a pressure-sensitive adhesive excellent in heat aging resistance and light resistance and is therefore particularly preferred. Use of 1,3-butadiene also enhances heat aging resistance and thereby tends to suppress deterioration ascribable to heating in an extruder, be less likely to cause reduction in performance, and not worsen the odor of the composition for a pressure-sensitive adhesive, and is therefore preferred. One of the conjugated diene compounds may be used singly, or two or more thereof may be used in combination.

The "polymer block (A) primarily comprising a vinyl aromatic monomer unit" refers to a polymer block including a vinyl aromatic monomer unit at a ratio of 50% by mass or more, preferably 70% by mass or more, more preferably 85% by mass or more, and further preferably 95% by mass or more based on the total amount of the polymer block (A). The "polymer block (B) primarily comprising a conjugated diene monomer unit" refers to a polymer block including a conjugated diene monomer unit at a ratio of more than 50% by mass, preferably 70% by mass or more, more preferably 85% by mass or more, and further preferably 95% by mass or more based on the total amount of the polymer block (B).

The content of the vinyl aromatic monomer unit in the thermoplastic elastomer A is preferably 10% by mass or more and 40% by mass or less. The content of the vinyl aromatic monomer unit in the range tends to provide a composition for a pressure-sensitive adhesive much more easily exhibiting excellent tack strength. From the viewpoint of obtaining a composition for a pressure-sensitive adhesive exhibiting much higher retention strength, the lower limit of the content is preferably 12% by mass or more, more preferably 15% by mass or more, and particularly preferably 20% by mass or more. From the viewpoint of obtaining a composition for a pressure-sensitive adhesive exhibiting much higher tack strength, the upper limit of the content of the vinyl aromatic monomer unit is preferably 35% by mass or less, more preferably 32% by mass or less, further preferably 25% by mass or less, and most preferably 20% by mass or less. The content can be measured by using a method described later in Examples.

From the viewpoint of exhibiting much larger tack strength, it is preferable that the thermoplastic elastomer A include a block copolymer (C) having a polymer block (A) primarily comprising a vinyl aromatic monomer unit and a polymer block (B) primarily comprising a conjugated diene monomer unit, wherein the number of the polymer block (A) is 1.

The content of the block copolymer (C) in the thermoplastic elastomer A is preferably 10% by mass or more and 90% by mass or less. The content of the block copolymer (C) in the range tends to provide a composition for a pressure-sensitive adhesive much more easily exhibiting excellent tack strength. From the viewpoint of obtaining a composition for a pressure-sensitive adhesive exhibiting much higher tackiness, the content of the block copolymer (C) is more preferably 30% by mass or more, further preferably 40% by mass or more, still further preferably 50% by mass or more, and most preferably 60% by mass or more. From the viewpoint of obtaining a composition for a pressure-sensitive adhesive exhibiting much higher retention strength, the content of the block copolymer (C) is more preferably 80% by mass or less, further preferably 75% by mass or less, still further preferably 70% by mass or less, furthermore preferably 65% by mass or less, and most preferably 60% by mass or less.

The weight average molecular weight of the block copolymer (C) is preferably 30,000 or higher and 200,000 or lower. The weight average molecular weight of the block copolymer (C) in the range tends to provide a composition for a pressure-sensitive adhesive more easily exhibiting excellent tack strength and tackiness. From the viewpoint of obtaining a composition for a pressure-sensitive adhesive easily exhibiting much higher softening point characteristics, the weight average molecular weight of the block copolymer (C) is more preferably 40,000 or higher, further preferably 50,000 or higher, still further preferably 60,000 or higher, furthermore preferably 70,000 or higher, and most preferably 80,000 or higher. From the viewpoint of obtaining a composition for a pressure-sensitive adhesive much more easily exhibiting excellent tack strength and tackiness and low melt viscosity characteristics, the weight average molecular weight of the block copolymer (C) is more preferably 180,000 or lower, further preferably 150,000 or lower, still further preferably 130,000 or lower, furthermore preferably 120,000 or lower.

The structure of the block copolymer (C) is not limited, and examples thereof include (A-B), (A-B)X, (B-A)X, (B-A-B), and (B-A-B)X (in which A denotes a polymer block (A); B denotes a polymer block (B); X denotes a residue of a coupling agent or a residue of a polymerization initiator). Among them, diblock copolymers represented by the formula (A-B) or the formula (A-B)X are preferred. The block copolymer (C) having such a structure tends to provide a composition for a pressure-sensitive adhesive much more easily exhibiting excellent tack strength, low melt viscosity characteristics, and high softening point characteristics.

It is preferable that the thermoplastic elastomer A further include a component (block copolymer)(D-1) having a ratio of weight average molecular weight to the weight average molecular weight of the block copolymer (C) of 1.5 or more and less than 2.5. The ratio of weight average molecular weight in terms of block copolymer(D-1)/block copolymer (C) is preferably 1.6 or more and less than 2.4, and more preferably 1.7 or more and less than 2.3. The ratio of weight average molecular weight in terms of block copolymer(D-1)/block copolymer (C) in the range tends to provide a composition for a pressure-sensitive adhesive much more easily exhibiting excellent tack strength, low melt viscosity characteristics, and high softening point characteristics.

It is preferable that the thermoplastic elastomer A further include a component (block copolymer)(D-2) having a ratio of weight average molecular weight to the weight average molecular weight of the block copolymer (C) of 2.5 or more and less than 3.4. The ratio of weight average molecular weight in terms of block copolymer(D-2)/block copolymer (C) is preferably 2.6 or more and less than 3.3, and more preferably 2.7 or more and less than 3.2. The ratio of weight average molecular weight in terms of block copolymer(D-2)/block copolymer (C) in the range tends to provide a composition for a pressure-sensitive adhesive much more easily exhibiting excellent tack strength, low melt viscosity characteristics, and high softening point characteristics.

It is preferable that the thermoplastic elastomer A further include a component (block copolymer)(D-3) having a ratio of weight average molecular weight to the weight average molecular weight of the block copolymer (C) of 3.4 or more and less than 4.5. The ratio of weight average molecular weight in terms of block copolymer(D-3)/block copolymer (C) is preferably 3.5 or more and less than 4.4, and more preferably 3.6 or more and less than 4.3. The ratio of weight average molecular weight in terms of block copolymer(D-3)/block copolymer (C) in the range tends to provide a composition for a pressure-sensitive adhesive much more easily exhibiting excellent tack strength, low melt viscosity characteristics, and high softening point characteristics.

As a preferred aspect, the ratio of an area for the block copolymer(D-1) in a GPC elution curve is preferably 0.2 or more and 0.5 or less, more preferably 0.25 or more and 0.45 or less, further preferably 0.3 or more and 0.4 or less to the total area for the thermoplastic elastomer A in a GPC elution curve. The ratio of an area for the block copolymer(D-1) in a GPC elution curve in the range tends to provide a composition for a pressure-sensitive adhesive further having excellent tack strength, low melt viscosity characteristics, and high softening point characteristics.

As an alternative preferred aspect, the ratio of an area for the block copolymer(D-2) in a GPC elution curve is preferably 0.1 or more and 0.5 or less, more preferably 0.12 or more and 0.45 or less, further preferably 0.13 or more and 0.4 or less to the total area for the thermoplastic elastomer A in a GPC elution curve. The ratio of an area for the block copolymer(D-2) in a GPC elution curve in the range tends to provide a composition for a pressure-sensitive adhesive further having excellent tack strength, low melt viscosity characteristics, and high softening point characteristics.

As an alternative preferred aspect, the ratio of an area for the block copolymer(D-3) in a GPC elution curve is preferably 0.1 or more and 0.5 or less, more preferably 0.12 or more and 0.45 or less, further preferably 0.13 or more and 0.4 or less to the total area for the thermoplastic elastomer A in a GPC elution curve. The ratio of an area for the block copolymer(D-3) in a GPC elution curve in the range tends to provide a composition for a pressure-sensitive adhesive further having excellent tack strength, low melt viscosity characteristics, and high softening point characteristics.

As an alternative preferred aspect, the ratio of an area for the block copolymer (D-2) in a GPC elution curve to an area for the block copolymer (D-1) in a GPC elution curve (block copolymer (D-2)/block copolymer (D-1) is preferably 2.0 or more, more preferably 2.5 or more, further preferably 3.0 or more. The ratio of an area in a GPC elution curve in the range tends to provide a composition for a pressure-sensitive adhesive further having excellent tack strength in preparing the pressure-sensitive adhesive, low melt viscosity characteristics, and high softening point characteristics.

As an alternative preferred aspect, the ratio of an area for the block copolymer (D-3) in a GPC elution curve to an area for the block copolymer (D-1) in a GPC elution curve (block copolymer (D-3)/block copolymer (D-1)) is preferably 2.0 or more, more preferably 2.5 or more, further preferably 3.0 or more. The ratio of an area in a GPC elution curve in the range tends to provide a composition for a pressure-sensitive adhesive further having excellent tack strength, low melt viscosity characteristics, and high softening point characteristics.

The ratio of weight average molecular weight of each of the block copolymer (D-1), the block copolymer (D-2) and the block copolymer (D-3) to the weight average molecular weight of the block copolymer (C), and the ratio of an area for each of the block copolymer (D-1), the block copolymer (D-2), and the block copolymer (D-3) in a GPC elution curve can be controlled to be within the above range on the basis of conditions for a coupling reaction, which will be described later, specifically, by adjusting the type of coupling, the amount of a coupling agent to be added, the temperature, and the duration. For example, the ratio of weight average molecular weight and the ratio of an area in a GPC elution curve can be controlled by selecting a compound containing four functional groups as a coupling agent.

The structure of each of the block copolymer (D-1), the block copolymer (D-2), and the block copolymer (D-3) is not limited, and each of the block copolymer (D-1), the block copolymer (D-2), and the block copolymer (D-3) may consist of a single type of a structural unit or be a mixture of one or more types of structural units. Examples thereof include $[(A-B)_N]_m$, $[(A-B)_N]_mX$, $[(B-A)_N]_mX$, $[(A-B)_NA]_mX$, and $[(B-A)_NB]_mX$ (in which A denotes a polymer block (A); B denotes a polymer block (B); X denotes a residue of a coupling agent or a residue of a polymerization initiator; N is 1 to 5; and m is 2 to 8 (2 to 6, and more preferably 2 to 4). Among them, a dibranched block copolymer represented by the formula $(A-B)_2X$ (hereinafter, occasionally referred to as "bifunctional block copolymer") is preferred for the block copolymer (D-1). For the block copolymer (D-2), a tribranched block copolymer represented by the formula $(A-B)_3X$ (hereinafter, occasionally referred to as "trifunctional block copolymer") is preferred. For the block copolymer (D-3), a tetrabranched block copolymer represented by the formula $(A-B)_4X$ (hereinafter, occasionally referred to as "tetrafunctional block copolymer") is preferred. The tribranched block copolymer and tetrabranched block copolymer contained tends to provide a composition for a pressure-sensitive adhesive much more easily exhibiting excellent tack strength, low melt viscosity characteristics, and high softening point characteristics.

The percentage H of hydrogenation based on the total amount of the unsaturated double bonds derived from the conjugated diene compound in the polymer block (B) primarily comprising a conjugated diene monomer unit is preferably 20% by mole or more, more preferably 25% by mole or more, further preferably 30% by mole or more, still further preferably 35% by mole or more, furthermore preferably 40% by mole or more, further preferably 50% by mole or more, and still further preferably 80% by mole or more. The percentage H of hydrogenation in the range tends to much more easily exhibit excellent thermal stability. The percentage H of hydrogenation based on the total amount of the unsaturated double bonds derived from the conjugated diene compound in the polymer block (B) primarily comprising a conjugated diene monomer unit is preferably 80% by mole or less, more preferably 75% by mole or less, further preferably 70% by mole or less, still further preferably 65% by mole or less, furthermore preferably 60% by mole or less, further preferably 55% by mole or less, and still further preferably 50% by mole or less. The percentage H of hydrogenation in the range tends to provide a composition for a pressure-sensitive adhesive having low Tg and easily exhibiting excellent tack strength up to lower temperatures. The percentage H of hydrogenation in the range also tends to enhance compatibility with a tackifier and provide a composition for a pressure-sensitive adhesive much more easily exhibiting excellent tack strength. Further, the percentage H of hydrogenation in the range tends to allow the resulting composition to be much more homogeneously mixed with composition E described later and further enhance the in-plane uniformity of the tack strength of a pressure-sensitive adhesive to be formed in extrusion, and tends to further suppress the formation of fish eyes.

[Tackifier B]

The tackifier B can be in the form of a resin (tackifier resin) and may be widely selected depending on the application of and required performance for the composition for a pressure-sensitive adhesive to be obtained. The tackifier is not limited, and examples thereof include rosin compounds such as natural rosins, modified rosins, glycerol esters of a natural rosin, glycerol esters of a modified rosin, pentaerythritol esters of a natural rosin, pentaerythritol esters of a modified rosin, hydrogenated rosins and pentaerythritol esters of a hydrogenated rosin; terpene compounds such as copolymers of a natural terpene, three-dimensional polymers of a natural terpene, aromatic modified terpene resins, hydrogenated derivatives of an aromatic modified terpene resin, terpene-phenol resins, hydrogenated derivatives of a terpene-phenol resin, terpene resins (e.g., monoterpenes, diterpenes, triterpenes and polyterpenes), hydrogenated terpene resins and hydrogenated derivatives of a hydrogenated terpene resin; petroleum hydrocarbon compounds such as aliphatic petroleum hydrocarbon resins (C5 resins), hydrogenated derivatives of an aliphatic petroleum hydrocarbon resin, aromatic petroleum hydrocarbon resins (C9 resins), hydrogenated derivatives of an aromatic petroleum hydrocarbon resin, dicyclopentadiene resins, hydrogenated derivatives of a dicyclopentadiene resin, C5/C9 copolymer resins, hydrogenated derivatives of a C5/C9 copolymer resin, cyclic aliphatic petroleum hydrocarbon resins and hydrogenated derivatives of a cyclic aliphatic petroleum hydrocarbon resin; and aromatic group-containing resins. One of these tackifiers may be used singly, or two or more thereof may be used in combination. Here, a C5/C9 copolymer resin refers to a copolymer petroleum resin obtained by polymerizing a mixture of a C5 fraction and C9 fraction as the starting material. Here, the "hydrogenated derivatives" described in the present specification refer to hydrogenation products and derivatives thereof.

Now, preferred tackifiers for various applications and performances will be described more specifically. From the viewpoint of suppression of coloration and less odor, hydrogenated derivatives are preferred for the tackifier. The hydrogenated derivative is not limited, and examples thereof include hydrogenated derivatives of an aromatic modified terpene resin, hydrogenated derivatives of a terpene-phenol resin, hydrogenated derivatives of a hydrogenated terpene resin, hydrogenated derivatives of an aliphatic petroleum hydrocarbon resin (C5 resin), hydrogenated derivatives of an aromatic petroleum hydrocarbon resin (C9 resin), hydrogenated derivatives of a dicyclopentadiene resin, hydrogenated derivatives of a C5/C9 copolymer resin and hydrogenated derivatives of a cyclic aliphatic petroleum hydrocarbon resin. Among them, hydrogenated derivatives of an aromatic petroleum hydrocarbon resin (C9 resin), hydrogenated derivatives of a dicyclopentadiene resin and hydrogenated derivatives of a hydrogenated terpene resin are particularly preferred, for example. The commercial product of such a hydrogenated derivative is not limited, and examples thereof include ARKON P and M Series (trade name) manufactured by Arakawa Chemical Industries, Ltd., I-MARV S and P series manufactured by Idemitsu Kosan Co., Ltd., ESCOREZ 5000 series (trade name) manufactured by ExxonMobil Chemical and CLEARON P series manufactured by YASUHARA CHEMICAL CO., LTD.

The tackifier other than hydrogenated derivatives is not limited, and examples thereof include natural rosins, modified rosins, glycerol esters of a natural rosin, glycerol esters of a modified rosin, pentaerythritol esters of a natural rosin, pentaerythritol esters of a modified rosin, hydrogenated rosins and pentaerythritol esters of a hydrogenated rosin; copolymers of a natural terpene, three-dimensional polymers of a natural terpene, aromatic modified terpene resins, terpene-phenol resins, terpene resins and hydrogenated terpene resins; and aliphatic petroleum hydrocarbon resins (C5 resins), aromatic petroleum hydrocarbon resins (C9 resins), dicyclopentadiene resins, C5/C9 copolymer resins and cyclic aliphatic petroleum hydrocarbon resins. Among them are preferred aliphatic petroleum hydrocarbon resins (C5 resins), aromatic petroleum hydrocarbon resins (C9 resins), C5/C9 copolymer resins, cyclic aliphatic petroleum hydrocarbon resins, terpene resins, natural and modified rosin esters, and mixtures thereof. Examples of commercially available product include for the aliphatic petroleum hydrocarbon resin (C5 resin), Quintone 100 series (trade name) manufactured by Zeon Corporation, ESCOREZ 1000 series manufactured by ExxonMobil Chemical and WINGTACK series (trade name) manufactured by Cray Valley; for the aromatic petroleum hydrocarbon resin (C9 resin) and C5/C9 copolymer resin, PICCOTAC series (trade name) manufactured by Eastman Chemical Company, ESCOREZ 2000 series (trade name) manufactured by ExxonMobil Chemical and FTR series (trade name) manufactured by Mitsui Chemicals, Inc.; for the terpene resin and natural and modified rosin ester, SYLVALITE series and SYLVARES series (trade name) manufactured by Arizona Chemical Company, LLC., PICCOLYTE series (trade name) manufactured by Pinova, Inc., and YS RESIN PX series (trade name) manufactured by YASUHARA CHEMICAL CO., LTD.

From the viewpoint of compatibility with a thermoplastic elastomer, the tackifier is preferably at least one selected from the group consisting of an aromatic modified terpene resin, a terpene-phenol resin, a terpene resin, an aliphatic tackifier, an aromatic petroleum hydrocarbon resin, a C5/C9 copolymer resin, and hydrogenated derivatives thereof.

From the viewpoint of obtaining a composition for a pressure-sensitive adhesive much more easily exhibiting excellent tack strength and high retention strength, exhibiting high compatibility with a thermoplastic elastomer, and easily obtaining a much more homogeneous pressure-sensitive adhesive in coextrusion by using an extruder, the tackifier is more preferably a terpene resin. The terpene resin is not limited, and YS Resin PX series (trade name) manufactured by YASUHARA CHEMICAL CO., LTD. can be preferably used, for example.

From the viewpoint of obtaining a composition for a pressure-sensitive adhesive easily exhibiting high tack strength and high retention strength, and economic efficiency, the tackifier is preferably an aliphatic tackifier. The aliphatic tackifier is not limited, and examples thereof include aliphatic petroleum hydrocarbon resins (C5 resins), hydrogenated derivatives of an aliphatic petroleum hydrocarbon resin (C5 resin), C5/C9 copolymer resins and hydrogenated derivatives of a C5/C9 copolymer resin. Here, an aliphatic tackifier refers to a tackifier in which the content of aliphatic hydrocarbon group is preferably 50% by mass or more, more preferably 70% by mass or more, further preferably 80% by mass or more, still further preferably 88% by mass or more, and furthermore preferably 95% by mass or more. The content of aliphatic hydrocarbon group in the range tends to much more easily exhibit excellent tack strength and retention strength and further provide excellent economic efficiency.

The aliphatic tackifier can be produced by homopolymerizing or copolymerizing monomers each having an aliphatic group and a polymerizable unsaturated group. The monomer having an aliphatic group and a polymerizable unsaturated group is not limited, and examples thereof include natural and synthetic terpenes containing a C5 or C6 cyclopentyl or cyclohexyl group. Other monomers which can be used in the copolymerization are not limited, and examples thereof include 1,3-butadiene, cis-1,3-pentadiene, trans-1,3-pentadiene, 2-methyl-1,3-butadiene, 2-methyl-2-butene, cyclopentadiene, dicyclopentadiene, terpenes and terpene-phenol resins.

From the viewpoint of obtaining a composition for a pressure-sensitive adhesive having high adhesion strength and high coatability, the tackifier is preferably an aromatic tackifier. The aromatic tackifier is not limited, and examples thereof include aromatic petroleum hydrocarbon resins (C9 resins) and C5/C9 copolymer resins. Here, an aromatic tackifier refers to a tackifier in which the content of aromatic hydrocarbon group is preferably 50% by mass or more, more preferably 70% by mass or more, further preferably 80% by mass or more, still further preferably 88% by mass or more, and furthermore preferably 95% by mass or more. The content of aromatic hydrocarbon group in the range tends to further enhance the tack strength.

The aromatic tackifier can be produced by homopolymerizing or copolymerizing monomers each having an aromatic group and a polymerizable unsaturated group. The monomer having an aromatic group and a polymerizable unsaturated group is not limited, and examples thereof include styrene, $\alpha$-methylstyrene, vinyltoluene, methoxystyrene, tert-butylstyrene, chlorostyrene and an indene monomer (including methylindene). Other monomers which can be used in the copolymerization are not limited, and examples thereof include 1,3-butadiene, cis-1,3-pentadiene, trans-1,3-pentadiene, 2-methyl-1,3-butadiene, 2-methyl-2-butene, cyclopentadiene, dicyclopentadiene, terpenes and terpene-phenol resins.

From the viewpoint of high adhesion strength and inhibition of change in adhesion strength over time or creep performance (smaller value is better), it is more preferable that the composition for a pressure-sensitive adhesive contain 20 to 75% by mass of a tackifier having affinity for a non-glass phase block (typically, an intermediate block) of the block copolymers, and 3 to 30% by mass of a tackifier having affinity for a glass phase block (typically, an outer block) of the block copolymers.

The tackifier having affinity for a glass phase block of the block copolymers is not limited, but is preferably a resin having an aromatic ring between the molecules. The resin is not limited, and examples thereof include aromatic group-containing resins such as homopolymers or copolymers containing vinyltoluene, styrene, $\alpha$-methylstyrene, coumarone or indene as a constitutional unit. Among them, KristAlEx and PlAstolyN (manufactured by Eastman Chemical Company, trade name) containing $\alpha$-methylstyrene are preferred.

The content of the tackifier having affinity for a glass phase block of the block copolymers is preferably 3 to 30% by mass, more preferably 5 to 20% by mass, and further preferably 6 to 12% by mass based on 100% by mass of the composition for a pressure-sensitive adhesive.

From the viewpoint of high initial adhesion strength, high wettability, low melt viscosity or high coatability, and the like, a petroleum resin having an aromatics content of 3 to 12% by mass is preferably used for the tackifier. The petroleum resin is not limited, and examples thereof include aliphatic petroleum hydrocarbon resins (C5 resins), hydrogenated derivatives of an aliphatic petroleum hydrocarbon resin (C5 resin), aromatic petroleum hydrocarbon resins (C9 resins), hydrogenated derivatives of an aromatic petroleum hydrocarbon resin (C9 resin), dicyclopentadiene resins, hydrogenated derivatives of a dicyclopentadiene resin, C5/C9 copolymer resins, hydrogenated derivatives of a C5/C9 copolymer resin, cyclic aliphatic petroleum hydrocarbon resins and hydrogenated derivatives of a cyclic aliphatic petroleum hydrocarbon resin. The aromatics content of the petroleum resin is preferably 3 to 12% by mass, and more preferably 4 to 10% by mass. Among them, hydrogenated petroleum resins are particularly preferred.

[Material for pressure-sensitive adhesive]

A material for a pressure-sensitive adhesive used in the present invention is a material, including composition C in a particulate form containing an integrated form of at least one of thermoplastic elastomer A and at least one of tackifier B, and composition E in a particulate form including at least one of thermoplastic elastomer D, wherein the tack strength of the material for a pressure-sensitive adhesive having ratio x is larger than that of the composition C having ratio α and larger than that of the composition E having ratio β, wherein x represents a ratio of the total amount of the thermoplastic elastomer to the total amount of the thermoplastic elastomer and the tackifier in the material for a pressure-sensitive adhesive; α represents a ratio of the total amount of the thermoplastic elastomer to the total amount of the thermoplastic elastomer and the tackifier in the composition C; and β represents a ratio of the total amount of the thermoplastic elastomer to the total amount of the thermoplastic elastomer and the tackifier in the composition E. The material for a pressure-sensitive adhesive used in the present invention thus configured can be difficult to block and easy to handle, and exhibit high tack strength.

From the viewpoint of being much more difficult to block and easier to handle and being able to exhibit much higher tack strength, it is preferable that the material for a pressure-sensitive adhesive used in the present invention satisfy the following expression (1):

$$\alpha < x < \beta \ \text{or} \ \beta < x < \alpha \quad (1)$$

[Composition C]

The composition C used in the present invention includes an integrated form of at least one of thermoplastic elastomer A and at least one of tackifier B.

One of the thermoplastic elastomers may be used singly, or two or more thereof may be used in combination. One of the tackifiers may be used singly, or two or more thereof may be used in combination. The composition C may appropriately include components other than those described above. The components other than those described above may be other components listed in the section about the composition for a pressure-sensitive adhesive.

The ratio of the total weight of the tackifier to the total weight of the thermoplastic elastomer (the total weight of the tackifier/the total weight of the thermoplastic elastomer) in the composition C may be in the range listed as the ratio of the total weight of the tackifier to the total weight of the thermoplastic elastomer in the composition for a pressure-sensitive adhesive used in the present invention.

[Composition E]

The composition E used in the present invention is a composition in a particulate form including at least one of thermoplastic elastomer D. One of the thermoplastic elastomers may be used singly, or two or more thereof may be used in combination. The thermoplastic elastomer D may be the same as or different from the thermoplastic elastomer A. The composition E may be a composition consisting of the thermoplastic elastomer D. The composition E may include a tackifier. One of the tackifiers may be used singly, or two or more thereof may be used in combination. The tackifier may be the same as or different from the tackifier B. The composition E may appropriately include components other than those described above. The components other than those described above may be other components listed in the section about the composition for a pressure-sensitive adhesive.

[Thermoplastic elastomer D]

The thermoplastic elastomer D may be the same as or different from the thermoplastic elastomer A. Here, the term "same" means that the thermoplastic elastomer D has the same structure as that of the thermoplastic elastomer A. From the viewpoint of further enhancing compatibility and miscibility with the thermoplastic elastomer A, it is preferable that the thermoplastic elastomer D be the same as the thermoplastic elastomer A. From the viewpoint of easily designing a wider range of tack performance, it is preferable that the thermoplastic elastomer D have a different structure from that of the thermoplastic elastomer A. In the case that the thermoplastic elastomer D is different from the thermoplastic elastomer A, it is also preferable that the structure of the thermoplastic elastomer D be any of the structures listed as the above-described preferred structure of the thermoplastic elastomer A.

The thermoplastic elastomer D is not limited, and examples thereof include the thermoplastic elastomers listed as the thermoplastic elastomer A. From the viewpoint of easily exhibiting much larger tack strength, it is preferable that the thermoplastic elastomer D include a block copolymer (F) having a polymer block (D) primarily comprising a vinyl aromatic monomer unit and a polymer block (E) primarily comprising a conjugated diene monomer unit, as in the thermoplastic elastomer A.

The vinyl aromatic hydrocarbon compound is not limited, and examples thereof include the vinyl aromatic hydrocarbon compounds listed for the thermoplastic elastomer A. Examples of a preferred vinyl aromatic hydrocarbon compound also include the preferred vinyl aromatic hydrocarbon compounds listed for the thermoplastic elastomer A.

The conjugated diene compound is not limited, and examples thereof include the conjugated diene compounds listed for the thermoplastic elastomer A. Examples of a preferred conjugated diene compound also include the preferred conjugated diene compounds listed for the thermoplastic elastomer A.

The "polymer block (D) primarily comprising a vinyl aromatic monomer unit" may be as defined in the "polymer block (A) primarily comprising a vinyl aromatic monomer unit".

The content of the vinyl aromatic monomer unit in the thermoplastic elastomer D is preferably in the range listed as the preferred content of the vinyl aromatic monomer unit in the thermoplastic elastomer A.

From the viewpoint of exhibiting much larger tack strength, it is preferable that the thermoplastic elastomer D include a block copolymer (F) having a polymer block (D) primarily comprising a vinyl aromatic monomer unit and a polymer block (E) primarily comprising a conjugated diene monomer unit, wherein the number of the polymer block (D) is 1.

From a similar viewpoint, the content of the block copolymer (F) in the thermoplastic elastomer D is preferably in the range listed as the preferred content of the block copolymer (C) in the thermoplastic elastomer A.

From a similar viewpoint, the weight average molecular weight of the block copolymer (F) is preferably in the range listed as the preferred range of the weight average molecular weight of the block copolymer (C).

The structure of the block copolymer (F) is not limited, and examples thereof include (A-B), (A-B)X, (B-A)X, (B-A-B), and (B-A-B)X (in which A denotes a polymer block (D); B denotes a polymer block (E); X denotes a residue of a coupling agent or a residue of a polymerization initiator). Among them, diblock copolymers represented by the formula (A-B) or the formula (A-B)X are preferred. The block copolymer (F) having such a structure tends to provide a material for a pressure-sensitive adhesive much more easily exhibiting excellent tack strength, low melt viscosity characteristics, and high softening point characteristics.

It is preferable that the thermoplastic elastomer D further include a block copolymer (H-1) corresponding to the block copolymer (D-1) in the thermoplastic elastomer A. It is preferable that the thermoplastic elastomer D further include a block copolymer (H-2) corresponding to the block copolymer (D-2) in the thermoplastic elastomer A. It is preferable that the thermoplastic elastomer D further include a block copolymer (H-3) corresponding to the block copolymer (D-3) in the thermoplastic elastomer A.

From a similar viewpoint, examples of a preferred ratio of an area for the block copolymer (H-1), a preferred ratio of an area for the block copolymer (H-2), and a preferred ratio of an area for the block copolymer (H-3) in a GPC elution curve to the total area of the thermoplastic elastomer D include the ranges listed as the preferred ratio of an area for the block copolymer (D-1), the preferred ratio of an area for the block copolymer (D-2), and the preferred ratio of an area for the block copolymer (D-3), respectively, to the total area of the thermoplastic elastomer A.

From a similar viewpoint, examples of a preferred ratio of an area for the block copolymer (H-2) to the area of the block copolymer (H-1), and a preferred ratio of an area for the block copolymer (H-3) to the area of the block copolymer (H-1) in a GPC elution curve include the ranges listed as the preferred ratio of an area for the block copolymer (D-2) to the area of the block copolymer (D-1), and the preferred ratio of an area for the block copolymer (D-3) to the area of the block copolymer (D-1), respectively.

In a GPC elution curve, (i) the ratio of weight average molecular weight of each of the block copolymer (H-1), the block copolymer (H-2) and the block copolymer (H-3) to the weight average molecular weight of the block copolymer (F), and (ii) the ratio of an area for each of the block copolymer (H-1), the block copolymer (H-2), and the block copolymer (H-3) in a GPC elution curve can be controlled to be within the above range on the basis of conditions for a coupling reaction, which will be described later, specifically, by adjusting the type of coupling, the amount of a coupling agent to be added, the temperature, and the duration. For example, the ratio of weight average molecular weight and the ratio of an area in a GPC elution curve can be controlled by selecting a compound containing four functional groups as a coupling agent.

The structure of each of the block copolymer (H-1), the block copolymer (H-2), and the block copolymer (H-3) is not limited, and each of the block copolymer (H-1), the block copolymer (H-2), and the block copolymer (H-3) may consist of a single type of a structural unit or be a mixture of one or more types of structural units. Examples of a specific structure include the structures listed as the structure of each of the block copolymer (D-1), the block copolymer (D-2), and the block copolymer (D-3) in which A denotes a polymer block (D) instead of the polymer block (A), and B denotes a polymer block (E) instead of the polymer block (B). Examples of a preferred structure also include the structures listed as the preferred structure of each of the block copolymer (D-1), the block copolymer (D-2), and the block copolymer (D-3) .

From a similar viewpoint, examples of preferred percentage H of hydrogenation based on the total amount of the unsaturated double bonds derived from the conjugated diene compound in the polymer block (E) primarily comprising a conjugated diene monomer unit include the range listed as the preferred range of the percentage H of hydrogenation based on the total amount of the unsaturated double bonds derived from the conjugated diene compound in the polymer block (B) primarily comprising a conjugated diene monomer unit.

As another aspect, from a similar viewpoint, examples of preferred percentage H of hydrogenation based on the total amount of the unsaturated double bonds derived from the conjugated diene compound in the polymer block (E) primarily comprising a conjugated diene monomer unit include the range listed as the preferred range of the percentage H of hydrogenation based on the total amount of the unsaturated double bonds derived from the conjugated diene compound in the polymer block (E) primarily comprising a conjugated diene monomer unit.

The ratio of the total weight of the tackifier to the total weight of the thermoplastic elastomer (the total weight of the tackifier/the total weight of the thermoplastic elastomer) in the composition E is not limited, but is preferably 0.3 or less, more preferably 0.2 or less, further preferably 0.1 or less, and still further preferably 0. The ratio of the total weight of the tackifier to the total weight of the thermoplastic elastomer in the range tends to weaken the tack strength of the composition E and renders the composition E difficult to block and easy to handle.

From the viewpoint of compatibility and miscibility with the composition C, the ratio of the total weight of the tackifier to the total weight of the thermoplastic elastomer (the total weight of the tackifier/the total weight of the thermoplastic elastomer) in the composition E is preferably 0.1 or more and 0.3 or less.

The composition E according to the present embodiments is preferably in a particulate form, as in the composition for a pressure-sensitive adhesive used in the present invention.

From the viewpoint of being much more difficult to block and excellent in handleability, it is preferable for the material for a pressure-sensitive adhesive used in the present invention that the tack strength of the composition C and/or the composition E substantially have no tack performance, i.e., be 4.0 N/10 mm or smaller, in the case that a layer consisting of the material for a pressure-sensitive adhesive is formed on a base material and the tack strength is measured in accordance with "Method for measuring tack strength (Thermoplastic elastomer and each composition)" described later, as in the composition for a pressure-sensitive adhesive according to the present embodiments.

The material for a pressure-sensitive adhesive according to the present embodiments may have the composition C and the composition E in a mixed form or an isolated form. For example, the composition C and the composition E belong to the mixed form when together packed in a bag, and belong to the isolated form when individually packed in bags as one set. The composition C and the composition E are suitable for distribution because the composition C and the composition E are difficult to block and easy to handle before production of a pressure-sensitive adhesive owing to small tack strength of each individual.

It is preferable for the material for a pressure-sensitive adhesive used in the present invention that the composition C and the composition E be dry-blended before an extrusion step described later to prepare a dry blend (dry-blend composition). This provides a much more homogeneous pressure-sensitive adhesive.

The ratio of blending weight of the composition C to the blending weight of the composition E (the blending weight of the composition C/the blending weight of the composition E) in the material for a pressure-sensitive adhesive used in the present invention (e.g., dry blend) is not limited, but is preferably 0.45 or more and 6.50 or less, more preferably 0.50 or more and 5.00 or less, further preferably 0.55 or more and 3.00 or less, most preferably 0.60 or more and 2.00 or less. The ratio of weight in the range tends to provide a material for a pressure-sensitive adhesive much more easily exhibiting excellent tack strength.

From the viewpoint of suppressing sorting at the time of extrusion molding while facilitating forming a highly homogeneous pressure-sensitive adhesive, each of the composition C and the composition E in the material for a pressure-sensitive adhesive (e.g., dry blend) is in a particulate form. From a similar viewpoint, the ratio of average particle major axis Le of the composition E to average particle major axis Lc of the composition C is preferably 0.6 or more and 1.4 or less (0.60 or more and 1.40 or less when significant figures are taken into consideration; the same holds true for the description below), more preferably 0.7 or more and 1.3 or less, further preferably 0.8 or more and 1.2 or less, and most preferably 0.9 or more and 1.1 or less. The ratio of average particle minor axis le of the composition E to average particle minor axis lc of the composition C is preferably 0.6 or more and 1.4 or less, more preferably 0.7 or more and 1.3 or less, further preferably 0.8 or more and 1.2 or less, and most preferably 0.9 or more and 1.1 or less. The ratio of major axis and/or minor axis between the compositions in the range of 0.6 or more and 1.4 or less can prevent an event in which only particles having a small diameter fall down when the compositions are mixed and charged into a hopper of an extruder, resulting in variations in the ratios of the compositions in the extruder. As a result, an adhesive coming out of the extruder contains polymers and a tackifier at a ratio as designed, and therefore easily exhibits intended characteristics from the viewpoint of tackiness and the like. Here, from such a viewpoint, it is originally required for the compositions that their frequency distributions of particle diameters rather than the average values of the particle diameters be approximated. However, extreme difference in the outline of distribution is quite unlikely to occur for the compositions, both of which are polymers molded into particles. It is therefore considered that the approximation of the frequency distributions can be estimated by determining the ratio of average particle major axis and/or average particle minor axis.

From the viewpoint of suppressing sorting at the time of extrusion molding while facilitating forming a highly homogeneous pressure-sensitive adhesive in preparing the pressure-sensitive adhesive, the ratio of average particle weight We of the composition E to average particle weight Wc of the composition C in the material for a pressure-sensitive adhesive according to the present embodiments (e.g., dry blend) is preferably 0.6 or more and 1.4 or less, more preferably 0.7 or more and 1.3 or less, further preferably 0.8 or more and 1.2 or less, and most preferably 0.9 or more and 1.1 or less.

The ratio of the total weight of the thermoplastic elastomer in the material for a pressure-sensitive adhesive (e.g., dry blend) is preferably 30% by mass or more, more preferably 35% by mass or more, further preferably 40% by mass or more, and still further preferably 45% by mass or more. The ratio of the total weight of the thermoplastic elastomers in the range tends to provide a material for a pressure-sensitive adhesive much more easily exhibiting excellent tack strength, tackiness, and retention strength. From the viewpoint of tending to provide a material for a pressure-sensitive adhesive easily exhibiting much higher tack strength, the ratio of the total weight of the thermoplastic elastomer (including the thermoplastic elastomer in the composition C and the composition E) in the material for a pressure-sensitive adhesive (e.g., dry blend) is preferably 80% by mass or less, more preferably 75% by mass or less, further preferably 70% by mass or less, and still further preferably 65% by mass or less.

From the viewpoint that the material for a pressure-sensitive adhesive used in the present invention tends to provide a material for a pressure-sensitive adhesive much more easily exhibiting excellent tack strength, tackiness, and retention strength, the ratio of the total weight of the tackifier in the material for a pressure-sensitive adhesive(e.g., dry blend) is preferably 70% by mass or less, more preferably 65% by mass or less, further preferably 60% by mass or less, and still further preferably 55% by mass or less. From the viewpoint of tending to provide a material for a pressure-sensitive adhesive (e.g., dry blend) much more easily exhibiting excellent tack strength, the ratio of the total weight of the tackifier(s) in the material for a pressure-sensitive adhesive (e.g., dry blend) is preferably 20% by mass or more, more preferably 25% by mass or more, further preferably 30% by mass or more, and still further preferably 35% by mass or more.

The material for a pressure-sensitive adhesive used in the present invention may include an optional component without inhibiting the effects of the present invention. The optional component is not limited, and examples thereof include antioxidants, optional polymers, waxes, stabilizers such as light stabilizers, and other additives.

The antioxidant is not limited, and examples thereof include hindered phenol antioxidants such as 2,6-di-t-butyl-4-methylphenol, N-octadecyl-3-(4'-hydroxy-3',5'-dit-butylphenyl)propionate, 2,2'-methylenebis(4-methyl-6-t-butylphenol), 2,2'-methylenebis(4-ethyl-6-t-butylphenol), 2,4-bis[(octylthio)methyl]-0-cresol, 2-t-butyl-6-(3-t-butyl-2-hydroxy-5-methylbenzyl)-4-methylphenylacrylate, 2,4-di-t-amyl-6-[1-(3,5-di-t-amyl-2-hydroxyphenyl)ethyl]phenylacrylate and 2-[1-(2-hydroxy-3,5-di-tert-pentylphenyl)]acrylate; sulfur-containing antioxidants such as dilauryl thiodipropionate, laurylstearyl thiodipropionate pentaerythritol-tetrakis($\beta$-laurylthiopropionate); and phosphorouscontaining antioxidants such as tris(nonylphenyl)phosphite and tris(2,4-di-t-butylphenyl)phosphite.

Examples of the commercial product of the antioxidant include SUMILIZER GM (trade name), SUMILIZER TPD (trade name) and SUMILIZER TPS (trade name) manufactured by Sumitomo Chemical Co., Ltd.; IRGANOX 1010 (trade name), IRGANOX HP2225FF (trade name), IRGAFOS 168 (trade name) and IRGANOX 1520 (trade name) manufactured by Ciba Specialty Chemicals Inc.; and JF77 (trade name) manufactured by Johoku Chemical Co., Ltd. One of these antioxidants may be used singly, or two or more thereof may be used in combination.

The optional polymer is not limited, and examples thereof include polyolefin copolymers, vinyl aromatic copolymers and other rubbers. The polyolefin copolymer is not limited, and examples thereof include atactic polypropylenes, ethylene-ethyl acrylate copolymers and $\alpha$-olefin polymers. The vinyl aromatic copolymer is not limited, and examples thereof include polymers such as styrene-ethylene block copolymers, styrene-butadiene block copolymers, styrene-propylene block copolymers, styrene-isoprene block copolymers, styrene-butadiene-isoprene block copolymers, styrene-butadiene/isoprene block copolymers, hydrogenated styrene-butadiene block copolymers, hydrogenated styrene-isoprene block copolymers, hydrogenated styrene-butadiene-isoprene block copolymers and hydrogenated styrene-butadiene/isoprene block copolymers. The vinyl aromatic copolymer may be a vinyl aromatic thermoplastic resin or a vinyl aromatic elastomer. The other rubber is not limited, and examples thereof include natural rubbers; and synthetic rubbers such as isoprene-isobutylene rubbers, polyisoprene rubbers, polybutadiene rubbers, styrene-butadiene rubbers, styrene-isoprene rubbers, propylene-butylene rubbers, ethylene-propylene rubbers, chloroprene rubbers, acrylic rubbers, isoprene-isobutylene rubbers and polypentenamer rubbers. Now, preferred optional polymers for various applications and performances will be described more specifically.

(Hydrogenated vinyl aromatic copolymer)

In the case that, for example, reduction of an adhesive residue when the material for a pressure-sensitive adhesive is peeled off, inhibition of change in adhesion strength over time or creep characteristics (smaller value is better), heat resistance, or light resistance is required, a hydrogenated vinyl aromatic copolymer may be used. The hydrogenated vinyl aromatic copolymer is not limited, and examples thereof include hydrogenated styrene-butadiene block copolymers having an S-EB-S (S: polystyrene block, EB: ethylene/butylene copolymer block) structure or the like; hydrogenated styrene-isoprene block copolymers having an S-EP-S (S: polystyrene block, EP: ethylene/propylene copolymer block) structure or the like; and hydrogenated styrene-butadiene-isoprene block copolymers having an S-E-EP-S(S: polystyrene block, E: ethylene block, EP: ethylene/propylene copolymer block) structure or the like. The content of styrene in the hydrogenated vinyl aromatic copolymer is preferably 10% by mass to 45% by mass based on 100% by mass of the hydrogenated vinyl aromatic copolymer. The ratio of hydrogenation of unsaturated group in the conjugated diene in the hydrogenated vinyl aromatic copolymer is preferably 30% by mole or more, more preferably 50% by mole or more, further preferably 70% by mole or more, and still further preferably 85% by mole or more.

(Isoprene block copolymer)

In the case that, for example, high adhesiveness or inhibition of gelling is required for the composition for a pressure-sensitive adhesive, an isoprene block copolymer, which has an isoprene monomer unit, may be used. The isoprene block copolymer is not limited, and examples thereof include styrene-isoprene block copolymers having a (S-I)N, (S-I)N-S or (S-I)NY (S: polystyrene block, I: polyisoprene block) structure or the like; and styrene-butadiene-isoprene block copolymers having a (S-I-B)N, (S-I-B)N-S, (S-I-B)NY (S: polystyrene block, I: polyisoprene block, B: polybutadiene block, Y: residue of polyfunctional coupling agent or residue of polymerization initiator; N is an integer of 1 or more, preferably an integer of 1 to 5), or, (S-I/B)N, (S-I/B)N-S, (S-I/B)NY (S: polystyrene block, I/B: isoprene/butadiene copolymer block, Y: residue of coupling agent or residue of polymerization initiator; n is an integer of 1 or more, preferably an integer of 1 to 5) structure or the like. It is more preferable that these have a radial structure.

(Ionomer)

In the case that, for example, high coatability at low temperatures, creep (smaller value is better), and high strength or high elongation is required for the material for a pressure-sensitive adhesive, a polymer in an ionomer state may be used. The ionomer is not limited, but polymers or copolymers containing a carboxylate, sulfonate or phosphonate which is neutralized or partially neutralized by a metal ion are preferred. The content of the ionomer is preferably 5% by mass or less based on the total amount of the material for a pressure-sensitive adhesive.

(Polyolefin copolymer)

In the case that, for example, storage stability at high temperatures, high elongation or reduction in the amount of a tackifier in the block copolymer composition is required for the material for a pressure-sensitive adhesive, a polyolefin copolymer may be used. The polyolefin copolymer is not limited, but copolymers of an $\alpha$-olefin and an olefin, and propylene homopolymers are preferred. The melting point of these polymer (conditions: 5°C/min in DSC measurement) is preferably 110°C or lower, more preferably 100°C or lower, and further preferably 60°C to 90°C. These polymers may be a thermoplastic resin or an elastomer. The molecular weight distribution of these polymers is preferably 1 to 4, and more preferably 1 to 3. From the viewpoint of processability, it is more preferred to use two or more of copolymers obtained by using an $\alpha$-olefin, or propylene homopolymers in combination. Specifically, it is preferred to use a polymer having a weight average molecular weight of 30000 to 60000 and a polymer having a weight average molecular weight of 60000 to 90000 in combination, and it is more preferred to use a polymer having a weight average molecular weight of 35000 to 55000 and a polymer having a weight average molecular weight of 60000 to 80000 in combination.

(Conjugated diene rubber)

In the case that it is intended to improve the composition for pressure-sensitive adhesive tapes in terms of tack strength to the own backing or sticking strength to the skin, a conjugated diene rubber may be used. The conjugated diene rubber is not limited, and examples thereof include isoprene-isobutylene rubbers, polyisoprene rubbers, polybutadiene rubbers, styrenebutadiene rubbers, styrene-isoprene rubbers and propylene-butylene rubbers. Among them, polyisoprene rubbers are preferred from the viewpoint of a high effect. The content of the conjugated diene rubber is preferably 3% by mass or more and 25% by mass or less, more preferably 5% by mass or more and 20% by mass or less, and further preferably 5% by mass or more and 150 by mass or less based on the total amount of the material for a pressure-sensitive adhesive. The content of the conjugated diene rubber of 3% by mass or more tends to enhance the tack strength to the own backing or sticking strength to the skin. In addition, the content of the conjugated diene rubber of 25% by mass or less tends to enhance the contraction strength and reduce an adhesive residue.

(Olefin elastomer)

In the case that, for example, elongation is required for the material for a pressure-sensitive adhesive, it is preferred to use an olefin elastomer in combination. The olefin elastomer is not limited, but preferably an olefin elastomer having Tg of -10°C or lower, for example. From the viewpoint of creep performance (smaller value is better), olefin elastomers having a block are more preferred.

(Wax)

The material for a pressure-sensitive adhesive may contain a wax, as necessary. The wax is not limited, and a paraffin wax, a microcrystalline wax, a low-molecular weight polyethylene wax or the like may be added, for example. In the case that low melt viscosity is required for the material for a pressure-sensitive adhesive, it is preferred to use at least one wax selected from a paraffin wax, a microcrystalline wax and Fischer-Tropsch wax in combination. The content of the wax is preferably 2 to 10% by mass, and more preferably 5 to 10% by mass. The melting point of the wax is preferably 50°C to 110°C, more preferably 65°C to 110°C, further preferably 70°C to 110°C, and still further preferably 75°C to 110°C. The softening point of a tackifier to be then used in combination is preferably 70°C or higher, and more preferably 80°C or higher. The G' (measurement conditions: 25°C, 10 rad/s) of a material for a pressure-sensitive adhesive to be then obtained is preferably 1 MPa or less. The crystallization temperature of the material for a pressure-sensitive adhesive is preferably 7°C or lower.

(Light stabilizer)

The material for a pressure-sensitive adhesive may contain a light stabilizer, as necessary. The light stabilizer is not limited, and examples thereof include benzotriazole ultraviolet absorbers such as 2-(2'-hydroxy-5'-methylphenyl)benzotriazole, 2-(2'-hydroxy-3',5'-t-butylphenyl)benzotriazole and 2-(2'-hydroxy-3',5'-di-t-butylphenyl)-5-chlorobenzotriazole; benzophenone ultraviolet absorbers such as 2-hydroxy-4-methoxybenzophenone; and hindered amine light stabilizers.

(Fine particle filler)

The material for a pressure-sensitive adhesive used in the present inventionk may further contain a fine particle filler as another additive. The fine particle filler is not limited as long as the fine particle filler is one commonly used. The fine particle filler is not limited, and examples thereof include mica, calcium carbonate, kaolin, talc, titanium oxide, diatomaceous earth, urea resins, styrene beads, calcined clay and starch. The shape is preferably spherical, and the dimension (the diameter for a spherical shape) is not limited.

As the components other than those described above, a softener or the like can be used. The softener refers to a substance having a function to lower the hardness of a viscous adhesive composition and lower the viscosity. The softener is not limited, and examples thereof include oils; plasticizers; synthetic liquid oligomers; and mixtures thereof. From the viewpoint of lowering of viscosity, enhancement of tackiness and lowering of hardness for the viscous adhesive composition, oils may be used. The oil is not limited, and examples thereof include known paraffin process oils, naphthene process oils and aromatic process oils; and mixed oils thereof. One of the softeners may be used singly, or two or more thereof may be used in combination. In the case of applications to be used in food packaging materials, from the viewpoint of preventing the softener from being transferred to food due to the bleedout of the softener, the composition for a pressure-sensitive adhesive includes the softener at a ratio of preferably 8% by mass or less, more preferably 5% by mass or less, and further preferably 3% by mass or less based on the total amount of the material for a pressure-sensitive adhesive, and still further preferably, substantially includes no softener. This phrase "substantially include no" means that even an inevitable amount of the softener to be mixed into production plants, materials, or the like is not excluded.

[Pressure-sensitive adhesive]

A pressure-sensitive adhesive includes the material for a pressure-sensitive adhesive used in the present invention. In the present specification, the "pressure-sensitive adhesive" refers to an adhesive that exerts adhesion by merely applying pressure thereto at a normal temperature for a short time and exhibits higher tack strength than that of each composition alone. The form of the "pressure-sensitive adhesive" is not limited and may be a layered form (hereinafter, also referred to as "pressure-sensitive adhesive layer"). The tack strength can be measured by using "Method for measuring tack strength (Thermoplastic elastomer and each composition) or (Two-layer film) or (Three-layer film)" described later. It is preferable that the pressure-sensitive adhesive used in the present invention exhibit a tack strength of 2.0 N/10 mm or larger. The tack strength in the range can be suitably used in applications, typified by the above-described resealable package, which require large tack strength. From a similar viewpoint, the tack strength of the pressure-sensitive adhesive is more preferably 2.2 N/10 mm or larger, further preferably 2.4 N/10 mm or larger, still further preferably 2.6 N/10 mm or larger, furthermore preferably 2.8 N/10 mm or larger, further preferably 3.0 N/10 mm or larger, still further preferably 3.2 N/10 mm or larger, furthermore preferably 3.4 N/10 mm or larger, further preferably 3.6 N/10 mm or larger, still further preferably 3.8 N/10 mm or larger, furthermore preferably 4.0 N/10 mm or larger, further preferably 4.5 N/10 mm or larger, and still further preferably 5.0 N/10 mm or larger.

[Multilayered film]

In the present invention, the multilayered film includes three or more layers and the multilayered film includes a pressure-sensitive adhesive layer in a layer other than an outermost layer. This tends to suppress blocking at the time of film take-up and further facilitate handling. From the viewpoint of exhibiting high tack strength, the thickness of the pressure-sensitive adhesive layer is preferably 5 $\mu$m or larger, more preferably 8 $\mu$m or larger, further preferably 10 $\mu$m or larger, still further preferably 12 $\mu$m or larger, and furthermore preferably 14 $\mu$m or larger.

Use of such a multilayered film as a lid material for a packaging material enables to provide a package from which the lid material is to be peeled at the interface between the pressure-sensitive adhesive layer and another material layer or the inside of the pressure-sensitive adhesive layer. Such a package can be a resealable (reclosable) package exhibiting large tack strength because the pressure-sensitive adhesive layer is exposed to the surface after peeling of the lid material from the package. Thus, the multilayered film is for resealing (reclosing) packaging.

[Method for producing thermoplastic elastomer]

A method for producing the thermoplastic elastomer used in the present invention is not limited, and known methods can be used. Hereinafter, a method for producing a thermoplastic elastomer including a polymer block primarily comprising a vinyl aromatic monomer unit and a polymer block primarily comprising a conjugated diene monomer unit will be taken as an example. Examples of the method for producing the thermoplastic elastomer according to the present embodiments include a method including: a step of polymerizing including copolymerizing a vinyl aromatic hydrocarbon compound such as styrene and a conjugated diene compound such as butadiene in an inert hydrocarbon solvent with an organic lithium compound as a polymerization initiator to obtain a block copolymer; and a step of coupling including reacting the block copolymer obtained with a coupling agent. In this case, the coupled block copolymer is the block copolymer (D-1) and/or (D-2) and/or (D-3), and the uncoupled block copolymer is the block copolymer (C), for example. Here, controlling the amount of the coupling agent to be added in this coupling reaction enables to adjust the contents of the block copolymer (C) and the block copolymer (D-1) and/or (D-2) and/or (D-3) in the above predetermined ranges.

Alternatively, such a thermoplastic elastomer can be obtained by using a method in which the block copolymer (C) and the block copolymer (D-1) and/or (D-2) and/or (D-3) are separately polymerized in advance and thereafter mixed.

The weight average molecular weight of each of the block copolymers can be adjusted by controlling the amount of an initiator such as an organic lithium compound. After the completion of a polymerization reaction, a coupling reaction is performed and the active species are deactivated by adding water, an alcohol, an acid or the like; and the polymerization solvent is separated by performing, for example, steam stripping; and thereafter the block copolymers (C) and (D-1) and/or (D-2) and/or (D-3) can be obtained by drying the resultant.

The method for polymerizing the block copolymers is not limited, and examples thereof include coordination polymerization, anionic polymerization and cationic polymerization. Among them, anionic polymerization is preferred from the viewpoint of easiness in controlling the structure. For the method for producing the block copolymer components through anionic polymerization can be used known methods without any limitation, and examples thereof include methods described in Japanese Patent Publication No. 36-19286, Japanese Patent Publication No. 43-17979, Japanese Patent Publication No. 46-32415, Japanese Patent Publication No. 49-36975, Japanese Patent Publication No. 48-2423, Japanese Patent Publication No. 48-4106, Japanese Patent Publication No. 56-28925, Japanese Patent Laid-Open No. 59-166518, and Japanese Patent Laid-Open No. 60-186577. The inert hydrocarbon solvent to be used in the step of polymerizing the block copolymers is not limited, and examples thereof include hydrocarbon solvents of an aliphatic hydrocarbon such as butane, pentane, hexane, isopentane, heptane, octane and isooctane; an alicyclic hydrocarbon such as cyclopentane, methylcyclopentane, cyclohexane, methylcyclohexane and ethylcyclohexane; and an aromatic hydrocarbon such as benzene, toluene, ethylbenzene and xylene. One of them may be used singly, or two or more thereof may be used in a mixture. The organic lithium compound to be used for a polymerization initiator in the step of polymerizing the block copolymers is not limited, and known compounds may be used. Examples thereof include ethyllithium, propyllithium, N-butyllithium, sec-butyllithium, tert-butyllithium, phenyllithium, propenyllithium and hexyllithium. In particular, n-butyllithium and sec-butyllithium are preferred. One of the organic lithium compounds may be used singly, or a mixture of two or more thereof may be used. By using the above-described method, the block copolymers can be each obtained as a block copolymer represented by any one of the following formulas:

$$(A\text{-}B)_N, (A\text{-}B)_N X, (A\text{-}B)_N A, [(A\text{-}B)_N]_m, (A\text{-}B)_N AX, (B\text{-}A)_N X, (B\text{-}A)_N B, (B\text{-}A)_N BX[(A\text{-}B)_N]_m X, [(B\text{-}A)_N]_m X, [(A\text{-}B)_N A]_m X, [(B\text{-}A)_N B]_m X$$

(in which, A denotes a polymer block (A); B denotes a polymer block (B); X denotes a residue of a coupling agent or a residue of a polymerization initiator; N is an integer of 1 or more, and preferably an integer of 1 to 5; and m is 2 to 8, preferably 2 to 6, and more preferably an integer of 2 to 4.). Among them, it is preferred to produce a block copolymer (C): formula (A-B) and a multibranched block copolymer (D-1), (D-2), and/or (D-3): formula (A-B)$_m$X through the above coupling reaction. For the coupling agent to obtain a multibranched block copolymer may be used known coupling agents. The bifunctional coupling agent is not limited, and examples thereof include bifunctional halogenated silanes such as dichlorosilane, monomethyldichlorosilane and dimethyldichlorosilane; bifunctional alkoxysilanes such as diphenyldimethoxysilane, diphenyldiethoxysilane, dimethyldimethoxysilane and dimethyldiethoxysilane; bifunctional halogenated alkanes such as dichloroethane, dibromoethane, methylene chloride and dibromomethane; bifunctional halogenated tins such as dichlorotin, monomethyldichlorotin, dimethyldichlorotin, monoethyldichlorotin, diethyldichlorotin, monobutyldichlorotin and dibutyldichlorotin; dibromobenzene, benzoic acid, CO, and 2-chloropropene. The trifunctional coupling agent is not limited, and examples thereof include trifunctional halogenated alkanes such as trichloroethane and trichloropropane; trifunctional halogenated silanes such as methyltrichlorosilane and ethyltrichlorosilane; and trifunctional alkoxysinales such as methyltrimethoxysilane, phenyltrimethoxysilane and phenyltriethoxysilane. The tetrafunctional coupling agent is not limited, and examples thereof include tetrafunctional halogenated alkanes such as carbon tetrachloride, carbon tetrabromide and tetrachloroethane; tetrafunctional halogenated silanes such as tetrachlorosilane and tetrabromosilane; tetrafunctional alkoxysilanes such as tetramethoxysilane and tetraethoxysilane; and tetrafunctional tin compounds such as tetrachlorotin, tetrabromotin and tetrabutyltin. The coupling agent with 5 or more functionalities is not limited, and examples thereof include 1,1,1,2,2-pentachloroethane, perchloroethane, pentachlorobenzene, perchlorobenzene, octabromodiphenyl ether and decabromodiphenyl ether. In addition, epoxidized soybean oils, di- to hexa-functional epoxy group-containing compounds, carboxylates and polyvinyl compounds such as divinyl benzene may be used. One of the coupling agents may be used singly, or two or more thereof may be used in combination. Among above compounds, tetramethoxysilane and tetraethoxysilane are particularly preferred.

The ratios of an area for the block copolymers (D-1), (D-2), and (D-3) in a GPC elution curve can be controlled on the basis of the amount of a coupling agent to be added, the temperature and the duration in a coupling reaction, as described above. Specifically, examples of the method for adjustment in the case that the coupling agent is an alkoxysilane compound include a method in which the duration from the time at which the reaction temperature reaches to the maximum temperature to the time at which the coupling agent is added is adjusted to 1 to 30 minutes, the reaction duration for the coupling agent is adjusted to 1 to 60 minutes, the reaction temperature is adjusted to 55 to 100°C, and the amount of the coupling agent to be added is adjusted to 0.025 to 0.30 in mole ratio to the total amount by mole of a polymerization initiator. Examples of the method for adjustment in the case that the coupling agent is a compound other than alkoxysilane compounds include a method in which the duration from the time at which the reaction temperature reaches to the maximum temperature to the time at which the coupling agent is added is adjusted to 1 to 30 minutes, the reaction duration for the coupling agent is adjusted to 1 to 35 minutes, the reaction temperature is adjusted to 50 to 95°C, and the amount of the coupling agent to be added is adjusted to 0.025 to 0.20 in mole ratio to the total amount by mole of a polymerization initiator. In addition, a deactivator may be added in the course of polymerizing the block copolymer (C). In this case, a component (C)' with a relatively low molecular weight is generated. Specifically, after polymerizing the vinyl aromatic monomer unit, a deactivator may be added at an arbitrary timing during polymerizing the conjugated diene monomer unit in an amount to deactivates 50% by mass or less of the conjugated diene monomer unit, without completely deactivating, to generate a diblock copolymer (C)' represented by the general formula (A-B') (in which B' denotes a polymer block (B) obtained by the deactivation during the polymerization). The content of the diblock copolymer represented by the general formula (A-B') is preferably 20% by mass or less, more preferably 15% by mass or less, and further preferably 10% by mass or less based on the total amount of the block copolymer composition. The diblock copolymer (C)' represented by the general formula (A-B') contained tends to further enhance the tack strength and retention strength.

(Hydrogenation reaction)

In the case that a part or all of the unsaturated double bonds derived from the conjugated diene compound in the block copolymer are hydrogenated, the method for hydrogenation is not limited, and hydrogenation may be performed by using a known method with a hydrogenation catalyst. The hydrogenation catalyst is not limited, and known catalysts may be used. Examples of the hydrogenation catalyst to be used include supported heterogeneous hydrogenation catalysts in which a metal such as Ni, Pt, Pd and Ru is supported on carbon, silica, alumina, diatomaceous earth or the like; what is called Ziegler-type hydrogenation catalysts with a transition metal salt such as an organic salt or acetylacetone salt of Ni, Co, Fe, Cr or the like, and a reductant such as an organic aluminum; homogenous hydrogenation catalysts such as what is called an organic metal complex such as an organic metal compound of Ti, Ru, Rh, Zr or the like. Specifically may be used hydrogenation catalysts described in Japanese Patent Publication No. 42-8704, Japanese Patent Publication No. 43-6636, Japanese Patent Publication No. 63-4841, Japanese Patent Publication No. 1-37970, Japanese Patent Publication No. 1-53851 and Japanese Patent Publication No. 2-9041. Among them, suitable examples of the hydrogenation catalyst include titanocene compounds, reductive organic metal compounds and mixtures thereof. The titanocene compound is not limited, and examples thereof include compounds described in Japanese Patent Laid-Open No. 8-109219. Specific examples thereof include compounds having at least one or more ligands with a (substituted) cyclopentadienyl skeleton such as biscyclopentadienyltitanium dichloride and monopentamethylcyclopentadienyltitanium trichloride, an indenyl skeleton or a fluorenyl skeleton. The reductive organic metal compound is not limited, and examples thereof include organic alkali metal compounds such as organic lithiums, organic magnesium compounds, organic aluminum compounds, organic boron compounds and organic zinc compounds. The hydrogenation reaction temperature is preferably 0 to 200°C, and more preferably 30 to 150°C. The pressure of hydrogen to be used in the hydrogenation reaction is preferably 0.1 to 15 MPa, more preferably 0.2 to 10 MPa, and further preferably 0.3 to 5 MPa. The hydrogenation reaction duration is preferably 3 minutes to 10 hours, and more preferably 10 minutes to 5 hours. The hydrogenation reaction may be performed in any of a batch process, a continuous process, and a combination thereof. The block copolymer composition can be obtained by removing the catalyst residue from the block copolymer solution resulting from the hydrogenation reaction and then separating the solution, as necessary. The method for separating the solvent is not limited, and examples thereof include a method in which a polar solvent which serves as a poor solvent to the hydrogenated block copolymer, such as acetone and an alcohol, is added to the reaction solution after the hydrogenation to precipitate the polymer for recovery; a method in which the reaction solution after the hydrogenation is charged into a hot water under stirring and the solvent is removed by using steam stripping for recovery; and a method in which the reaction solution after the hydrogenation is heated to distil away the solvent. The amount (% by mass) of the polymer block (A) based on the total amount (100% by mass) of the vinyl aromatic monomer unit used for polymerizing the block copolymers, i.e., the block percentage, is preferably 90% by mass or more, more preferably 95% by mass or more, and further preferably 97% by mass or more. The block percentage in the range tends to provide a block copolymer composition excellent in finishing characteristics, and a composition for a pressure-sensitive adhesive containing the block copolymer composition tends to be excellent in tack strength and retention strength. The amount of the polymer block of the vinyl aromatic monomer can be calculated as follows: the block copolymer is dissolved in chloroform and an osmic acid/ tert-butyl hydroperoxide solution is added thereto to break the double bonds in the butadiene component; next, methanol is added thereto, the resultant is filtrated, and the residue is dissolved in chloroform; and the content of the block styrene is calculated from the peak strength (absorption wave length: 262 nm) of the solution obtained with an ultraviolet spectrophotometer. A step of demineralizing metals derived from the polymerization initiator or the like may be employed, as necessary, in the method for producing the block copolymer composition according to the present embodiments. In addition, a step of adding an antioxidant, a neutralizer, a surfactant or the like may be employed, as necessary, in the method for producing the block copolymer composition according to the present embodiments. The antioxidant is not limited, and examples thereof include hindered phenol compounds, phosphorous compounds and sulfur compounds, as described later. The neutralizer is not limited, and examples thereof include various metal salts of stearic acid, hydrotalcite and benzoic acid. The surfactant is not limited, and examples thereof include anionic surfactants, nonionic surfactants and cationic surfactants. The anionic surfactant is not limited, and examples thereof include fatty acid salts, alkylsulfates and alkylarylsulfonates. The nonionic surfactant is not limited, and examples thereof include polyoxyethylene alkyl ethers and polyoxyethylene alkylaryl ethers. The cationic surfactant is not limited, and examples thereof include alkylamine salts and quaternary ammonium salts. The block copolymer composition according to the present embodiments, which can be produced as described above, may contain what is called a modified block copolymer in which a polar group-containing functional group containing an atom selected from nitrogen, oxygen, silicon, phosphorus, sulfur and tin is bonding to the block copolymer, or a modified block copolymer the block copolymer component of which has been modified with a modifying agent such as maleic anhydride. Such a modified block copolymer can be obtained by performing a known modification reaction for the block copolymers obtained by the above-described method, for example. The method for imparting these functional groups is not limited, and examples thereof include a method in which a functional group is added to a polymer by using a compound having a functional group for an initiator, a monomer, a coupling agent or a terminator. For the initiator having a functional group are preferred initiators containing an N group, and examples thereof include dioctylaminolithium, di-2-ethylhexylaminolithium, ethylbenzylaminolithium, (3-(dibutylamino)-propyl)lithium and piperidinolithium. Examples of the monomer having a functional group include compounds in which a hydroxy group, an acid anhydride group, an epoxy group, an amino group, an amide group, a silanol group or an alkoxysilane group is contained in the above-described monomer to be used for polymerization. Among them, monomers containing an N group are preferred, and examples thereof include N,N-dimethylvinylbenzylamine, N,N-diethylvinylbenzylamine, N,N-dipropylvinylbenzylamine, N,N-dibutylvinylbenzylamine, N,N-diphenylvinylbenzylamine, 2-dimethylaminoethylstyrene, 2-diethylaminoethylstyrene, 2-bis(trimethylsilyl)aminoethylstyrene, 1-(4-N,N-dimethylaminophenyl)-1-phenylethylene, N,N-dimethyl-2-(4-vinylbenzyloxy)ethylamine, 4-(2-pyrrolidinoethyl)styrene, 4-(2-piperidinoethyl)styrene, 4-(2-hexamethyleneiminoethyl)styrene, 4-(2-morpholinoethyl)styrene, 4-(2-thiazinoethyl)styrene, 4-(2-N-methylpiperazinoethyl)styrene, 1-((4-vinylphenoxy)methyl)pyrrolidine, and 1-(4-vinylbenzyloxymethyl)pyrrolidine. Examples of the coupling agent and terminator having a functional group include compounds in which a hydroxy group, an acid anhydride group, an epoxy group, an amino group, an amide group, a silanol group or an alkoxysilane group is contained in the above-described coupling agent. Among them, coupling agents containing an N group or an O group are preferred, and examples thereof include tetraglycidyl m-xylenediamine, tetraglycidyl-1,3-bisaminomethylcyclohexane, tetraglycidyl-p-phenylenediamine, tetraglycidyl diaminodiphenylmethane, diglycidylaniline, γ-caprolactone, γ-glycidoxyethyltrimethoxysilane, γ-glycidoxypropyltrimethoxysilane, γ-glycidoxypropyltriphenoxysilane, γ-glycidoxypropylmethyldimethoxysilane, γ-glycidoxypropyldiethylethoxysilane, 1,3-dimethyl-2-imidazolidinone, 1,3-diethyl-2-imidazolidinone, N,N'-dimethylpropyleneurea, and N-methylpyrrolidone.

After producing the block copolymers according to the present embodiments as described above, the block polymers are isolated, i.e., finished by using a method described later. In the case that the step of polymerizing the block copolymers has been performed in an inert hydrocarbon solvent, the inert hydrocarbon solvent is removed to isolate the block copolymers. Specific examples of the method for removing the solvent include steam stripping. A hydrous crumb is obtained by using steam stripping, and the hydrous crumb is dried to obtain the block copolymers. In steam stripping, it is preferred to use a surfactant as a crumb-forming agent. The surfactant is not limited, and examples thereof include the above-described anionic surfactants, cationic surfactants and nonionic surfactants. These surfactants may be added typically in an amount of 0.1 to 3000 ppm relative to water in the stripping zone. Further, a water-soluble salt of a metal such as Li, Na, Mg, Ca, Al and Zn may be used as a dispersion aid for the crumb in addition to the surfactant. The concentration of the crumb-like block copolymer dispersed in water resulting from the step of polymerizing the block copolymer and the steam stripping is typically 0.1 to 20% by mass (ratio relative to water in the stripping zone). This range provides a crumb having a satisfactory particle diameter without any trouble in operation. It is preferred to adjust the water content of the crumb of the block copolymer to 1 to 30% by mass though dehydration and then dry the crumb until the water content reaches to 1% by mass or less. In the step of dehydrating the crumb, dehydration may be performed with a roll, a Banbury dehydrator, or a compression dehydrator such as a screw-extruding press dehydrator, or dehydration and drying may be performed simultaneously with a conveyer-type or box-type hot air dryer.

[Method for producing composition for pressure-sensitive adhesive]

A method for producing the composition for a pressure-sensitive adhesive used in the present invention is not limited, and known methods can be used. An exemplary method includes mixing a thermoplastic elastomer and a tackifier at any blending ratio by using an apparatus with heating and kneading (such as stirring) functions, such as a single- or twin-screw extruder, a mixer, or a kneader, melt-extruding the mixture into water or putting the mixture onto a cooling belt and solidifying the mixture by cooling, and then cutting the resultant into an appropriate size of particles such as pellets or beads. In the case of melt-extruding the mixture into water, an exemplary method includes cutting the mixture into particles such as pellets by using a cutting granulator in water. As described above, the ratio of average particle major axis Le of the composition E to average particle major axis Lc of the composition C is preferably 0.6 or more and 1.4 or less. Since particle diameters tend to differ depending on production methods, it is a preferred aspect to set methods for producing each particle in view of influence on particle diameters. For example, particles tend to become rounder and larger by cutting compositions in water than by cutting strands of the compositions in air (strand cutting). It is preferable that the ratio of particle diameter of the composition E to the particle diameter of the composition C (ratio of major axis) be set to 0.6 or more and 1.4 or less, or set in light of such a tendency in order to render their particle diameters closer within this range.

A temperature at the time of kneading differs depending on compositions, apparatuses to be used, and the like, but is typically 100 to 250°C, and preferably 120 to 180°C, and a kneading time is typically 10 to 120 minutes, and preferably 15 to 60 minutes.

The method for producing the composition for a pressure-sensitive adhesive according to the present embodiments may include a dehydration or drying step of dehydrating or drying the composition thus cut in water, and a step of attaching an antiblocking agent to the dehydrated or dried product by post-addition. Alternatively, an antiblocking agent may be added to the dehydrated product, which is then dried. The method for producing the composition for a pressure-sensitive adhesive according to the present embodiments may include a step of attaching an antiblocking agent to the surface of the composition by adding the antiblocking agent into water in advance. The dehydration or drying method is not limited, and a centrifugal dehydrator or the like can be used.

[Method for forming pressure-sensitive adhesive]

A first method for forming the pressure-sensitive adhesive used in the present invention (hereinafter, also referred to as "method for forming the pressure-sensitive adhesive") includes an extrusion step of together extruding composition C in a particulate form containing an integrated form of at least one of thermoplastic elastomer A and at least one of tackifier B and composition E in a particulate form including at least one of thermoplastic elastomer D by using an extruder to obtain a pressure-sensitive adhesive, wherein in the extrusion step, the tack strength of the pressure-sensitive adhesive having ratio y is larger than that of the composition C having ratio α and larger than that of the composition E having ratio β, wherein y represents a ratio of the total amount of the thermoplastic elastomer to the total amount of the thermoplastic elastomer and the tackifier in the pressure-sensitive adhesive; α represents a ratio of the

19

total amount of the thermoplastic elastomer to the total amount of the thermoplastic elastomer and the tackifier in the composition C; and β represents a ratio of the total amount of the thermoplastic elastomer to the total amount of the thermoplastic elastomer and the tackifier in the composition E. The first method for forming the pressure-sensitive adhesive agent according to the present embodiments thus configured can provide a pressure-sensitive adhesion being difficult to block and easy to handle and having high tack strength.

A second method for forming the pressure-sensitive adhesive (hereinafter, also referred to as "method for forming the pressure-sensitive adhesive") is configured to include an extrusion step of together extruding the composition for a pressure-sensitive adhesive used in the present invention and composition E including at least one of thermoplastic elastomer D by using an extruder to obtain a pressure-sensitive adhesive, wherein in the extrusion step, the tack strength of the pressure-sensitive adhesive having ratio y is larger than that of the composition for a pressure-sensitive adhesive having ratio α' and larger than that of the composition E having ratio β, wherein y represents a ratio of the total amount of the thermoplastic elastomer to the total amount of the thermoplastic elastomer and the tackifier in the pressure-sensitive adhesive; α' represents a ratio of the total amount of the thermoplastic elastomer to the total amount of the thermoplastic elastomer and the tackifier in the composition for a pressure-sensitive adhesive; and β represents a ratio of the total amount of the thermoplastic elastomer to the total amount of the thermoplastic elastomer and the tackifier in the composition E. The second method for forming the pressure-sensitive adhesive used in the present invention thus configured can provide a pressure-sensitive adhesion being difficult to block and easy to handle and having high tack strength.

A third method for forming the pressure-sensitive adhesive used in the present invention (hereinafter, also referred to as "method for forming the pressure-sensitive adhesive") includes an extrusion step of together extruding composition C containing an integrated form of at least one of thermoplastic elastomer A and at least one of tackifier B and the composition for a pressure-sensitive adhesive by using an extruder to obtain a pressure-sensitive adhesive, wherein in the extrusion step, the tack strength of the material for a pressure-sensitive adhesive having ratio y is larger than that of the composition C having ratio α and larger than that of the composition for a pressure-sensitive adhesive having ratio α', wherein y represents a ratio of the total amount of the thermoplastic elastomer to the total amount of the thermoplastic elastomer and the tackifier in the pressure-sensitive adhesive; α represents a ratio of the total amount of the thermoplastic elastomer to the total amount of the thermoplastic elastomer and the tackifier in the composition C; and α' represents a ratio of the total amount of the thermoplastic elastomer to the total amount of the thermoplastic elastomer and the tackifier in the composition for a pressure-sensitive adhesive. The third method for forming the pressure-sensitive adhesive thus configured can provide a pressure-sensitive adhesion being difficult to block and easy to handle and having high tack strength.

In the method for forming the pressure-sensitive adhesive used in the present invention, the term "extrude" refers to extruding so as to form an extrudate having homogeneous composition (rather than extruding at the same time).

In the method for forming the pressure-sensitive adhesive used in the present invention, a composition having a tack strength adjusted so as to be weak is preferred for each of the compositions (the composition C, the composition E, and the composition for a pressure-sensitive adhesive). Specifically, the tack strength of each of the compositions is preferably 4.0 N/10 mm or smaller, more preferably 3.0 N/10 mm or smaller, further preferably 2.0 N/10 mm or smaller, still further preferably 1.0 N/10 mm or smaller, furthermore preferably 0.5 N/10 mm or smaller, and most preferably 0.0 N/10 mm, in the case that the tack strength is measured in accordance with "Method for measuring tack strength (Thermoplastic elastomer and each composition)" described later. Each composition exhibiting such tack strength cannot be used in the applications of a pressure-sensitive adhesive required to have high tack strength by itself, but can exhibit higher tack strength than that of the composition used alone, by kneading the compositions in appropriate makeups and amounts.

In the case of forming a pressure-sensitive adhesive layer by using a composition exhibiting desired tack strength, for example, in a general method for forming a pressure-sensitive adhesive, pellets of this composition are easy to block and problematic with handling due to their large tack strength when the pellets are to be extrusion-molded in an extruder. Accordingly, in the method for forming the pressure-sensitive adhesive used in the present invention, the composition exhibiting the desired tack strength is separated into at least two compositions having different makeups (e.g., a combination of the composition for a pressure-sensitive adhesive and the composition C, a combination of the composition for a pressure-sensitive adhesive and the composition E, and a combination of the composition C and the composition E), and respective pellets of these compositions are prepared. These pellets are mixed at a predetermined ratio and extruded and can thereby established such that the pressure-sensitive adhesive exhibits large tack strength, in spite of the small tackiness of the pellets.

More specifically, in the first method for forming the pressure-sensitive adhesive, the compositional ratios of the composition C and the composition E and their mixing ratio can be determined as described below. Assuming that, for example, the compositional ratio between thermoplastic elastomer X and tackifier Y is y:1 - y in a pressure-sensitive adhesive consisting of only the thermoplastic elastomer and the tackifier and exhibiting desired tack strength, α represents a ratio of the total amount of the thermoplastic elastomer X to the total amount of the thermoplastic elastomer X and the tackifier Y in the composition C, and (1 - $\alpha$) represents a ratio of the total amount of the tackifier Y thereto. $\beta$ represents a ratio of the total amount of the thermoplastic elastomer X to the total amount of the thermoplastic elastomer X and the tackifier Y in the composition E, and (1 - $\beta$) represents a ratio of the total amount of the tackifier Y thereto. In this case, when the composition C and the composition E are mixed at a mixing ratio of $\gamma$:1 - $\gamma$, the compositional ratio between the thermoplastic elastomer X and the tackifier Y in the mixture can be expressed as $[(\alpha - \beta)\gamma + \beta]:[1 - \{(\alpha - \beta)\gamma + \beta)\}]$. The makeups of the composition C and the composition E and their mixing ratio can be determined by first determining $\alpha$ and $\beta$ so as to weaken tack strength, and then determining $\gamma$ such that the whole makeup is y:1 - y. In this respect, a relation of $\alpha < y < \beta$ or $\beta < y < \alpha$ holds among $\alpha$, $\beta$ and y. Since the relationship between the "blending ratio between the thermoplastic elastomer and the tackifier" and the "tack strength" in the pressure-sensitive adhesive is a convex curvilinear relationship, there exists a range in which tack strength is decreased in regions where the total amount of the thermoplastic elastomer X to be blended is large or small, from the desired compositional ratio y. Hence, a composition having the compositional ratio $\alpha$ different from the desired compositional ratio y and a composition having the compositional ratio $\beta$ are mixed as described above. This enables exhibition of high tack strength as a mixture while keeping the tack strength of each of the compositions low. This example is an example in which the compositional ratios of the composition C and the composition E and their mixing ratio are designed by utilizing the fact that the tack strength of a composition exhibiting high tack strength can be weakened by changing the ratio between a plastic elastomer and a tackifier. Each of the compositions may include a distinctive plastic elastomer and tackifier, as a matter of course. Although the combination of the composition C and the composition E is described above, this holds true for the combination of the composition for a pressure-sensitive adhesive used in the present invention and the composition C, and the combination of the composition for a pressure-sensitive adhesive used in the present invention and the composition E.

"Component Z other than the thermoplastic elastomer and the tackifier" typified by a plasticizer can also be appropriately blended into the pressure-sensitive adhesive according to the present embodiments. In this case as well, each of the compositional ratios and the mixing ratio can be determined in the same manner as above.

In the case of forming a pressure-sensitive adhesive having a desired compositional ratio by mixing three or more compositions, each of the compositional ratios and the mixing ratio can also be determined in the same manner as above.

The compositions (the composition for a pressure-sensitive adhesive, the composition C, and the composition E) having the compositional ratio determined as described above are coextruded with their respective partners by using the same extruder and can thereby exhibit higher tack strength after being kneaded than that of each of the compositions, though the compositions each have small tack strength when handled and are thus easy to handle.

From the viewpoint of obtaining a much more homogeneous pressure-sensitive adhesive by using the method for forming the pressure-sensitive adhesive, it is preferable that each of the compositions be in a particulate form and the method for forming the pressure-sensitive adhesive include a dry blending step of dryblending the compositions before the extrusion step to prepare material F for a pressure-sensitive adhesive.

From the viewpoint of being much more difficult to block and excellent in handleability, the tack strength of at least one of the compositions is preferably 4.0 N/10 mm or smaller in the case that the tack strength is measured in accordance with "Method for measuring tack strength (Thermoplastic elastomer and each composition)" described later.

From the viewpoint of obtaining a pressure-sensitive adhesive further having excellent tack strength, tackiness, and retention strength, the ratio of the total weight of the thermoplastic elastomer in the pressure-sensitive adhesive is preferably 30% by mass or more and 80% by mass or less.

From the viewpoint of obtaining a pressure-sensitive adhesive further having excellent tack strength, tackiness, and retention strength, the ratio of the total weight of the tackifier in the pressure-sensitive adhesive is preferably 20% by mass or more and 70% by mass or less.

Examples

Hereinafter, the present invention will be described in detail with reference to specific Examples and Comparative Examples, but the present invention is never limited to the following Examples.
Examples 15 to 18 relate to three-layer films for which resealing was tested and are therefore examples according to the invention. The other examples are reference examples and are maintained for the understanding of the invention.
In the following Examples and Comparative Examples, measurements of the characteristics and physical properties of a polymer were performed according to the following method.

[Measurement methods and evaluation methods]

<(1): Characteristics of thermoplastic elastomer>

<(1-1): Content of vinyl aromatic monomer unit (styrene)>

A predetermined amount of a thermoplastic elastomer was dissolved in chloroform, and after measurement with an ultraviolet spectrophotometer (UV-2450, manufactured by Shimadzu Corporation), the content of the vinyl aromatic monomer unit (styrene) was calculated from the peak strength at the absorption wavelength (262 nm) due to a vinyl aromatic compound component (styrene) with use of a calibration curve.

<(1-2): Weight average molecular weight>

The weight average molecular weights of the block copolymers (C), (D-1), (D-2), and (D-3) were determined on the basis of the peak molecular weight in the chromatogram with use of a calibration curve (prepared by using the peak molecular weight of a standard polystyrene) determined from measurement for a commercially available standard polystyrene under conditions described later. For a hydrogenated sample, the molecular weight of the polymer after hydrogenation was measured. First, a single peak which had the smallest peak top molecular weight in the molecular weight range of 20,000 or higher, and had a ratio of an area of 0.1 or more, which was calculated to the total peak area for the block copolymer composition through peak partitioning described later, was used as the peak for the block copolymer (C), and the peaks in the molecular weight range higher than the molecular weight of the block copolymer (C) were used as the peaks for (D-1), (D-2), and (D-3) in the ascending order of molecular weights. The weight average molecular weights of the block copolymers (C), ((D-1), (D-2), and (D-3) were determined through vertical partitioning of the GPC curve to the base line at inflection points between peaks with a system software described later. Here, the lowest point in the vertical direction (trough peak) between adjacent peaks was used for an inflection point between peaks for the block copolymers (C), (D-1), (D-2), and (D-3). In the case that the lowest point is present continuously, the intermediate point was used. By using a waveform separation function in the waveform separation software, vertical partitioning was performed at each of the above-described inflection points and thereafter the corresponding weight average molecular weight and the ratio of an area were calculated.

(Measurement conditions)

GPC: ACQUITY APC system (manufactured by Nihon Waters K.K.)
system (measurement/analysis) software: Empower 3 detector: RI
refractive index unit at full scale: 500 $\mu$RIU
output at full scale: 2000 mV
sampling rate: 10 points/sEC
column: ACQUITY APC XT125 (4.6 mm $\times$ 150 mm); $\times$1

ACQUITY APC XT200 (4.6 mm $\times$ 150 mm); $\times$1
ACQUITY APC XT900 (4.6 mm $\times$ 150 mm); $\times$1
ACQUITY APC XT450 (4.6 mm $\times$ 150 mm); $\times$1

solvent: THF
flow rate: 1.0 mL/min
concentration: 0.1 mg/mL
column temperature: 40°C
injection volume: 20 $\mu$L

<(1-3): Ratio of weight average molecular weight>

The ratios of weight average molecular weight (block copolymer (D-1)/component (C)), (block copolymer (D-2)/component (C)), and (block copolymer (D-3)/component (C)) were determined from the weight average molecular weights of the block copolymers (C), (D-1), (D-2), and

(D-3) determined above.

<(1-4): Contents of block copolymers (C), (D-1), (D-2), and (D-3)>

The ratio of a peak area for the block copolymers (C), (D-1), (D-2), and (D-3) to the total peak area in an elution curve determined in the above (1-2) were used as the contents of the block copolymers (C), (D-1), (D-2), and (D-3). A peak at a weight average molecular weight 1.5 times or more and less than 2.5 times as high as the weight average molecular weight of the block copolymer (C), a peak at a weight average molecular weight 2.5 times or more and less than 3.4 times as high as the weight average molecular weight of the block copolymer (C), and a peak at a weight average molecular weight 3.4 times or more and less than 4.5 times as high as the weight average molecular weight of the block copolymer (C) were used as the peak for the component (D-1), the peak for the component (D-2), and the peak for the component (D-3), respectively. The ratio of an area and the weight average molecular weight of each of the block copolymers (D-1), (D-2), and (D-3), and the ratio of weight average molecular weight were determined through GPC measurement with use of the above apparatus and conditions followed by vertical partitioning to the base line at inflection points between peaks in the GPC curve with the above-described system software. Here, the lowest point in the vertical direction (trough peak) between adjacent peaks was used for an inflection point between peaks for the block copolymers (D-1), (D-2), and (D-3). In the case that the lowest point is present continuously, the intermediate point was used. By using a waveform separation function in the above-described system software, vertical partitioning was performed at each of the above-described inflection points and thereafter the corresponding weight average molecular weight, the ratio of weight average molecular weight and the ratio of an area were calculated.

<(1-5): Average content of vinyl bonding in conjugated diene monomer unit>

The average content of vinyl bonding in the conjugated diene monomer unit was calculated for a block copolymer composition before hydrogenation with an infrared spectrophotometer (FT/IR-230, manufactured by JASCO Corporation) in accordance with a Hampton method.

<(1-6) Ratio of hydrogenation>

The ratio of hydrogenation of the double bonds in the conjugated diene monomer unit in a block copolymer was measured with a nuclear magnetic resonance apparatus (NMR) under the following conditions. First, a large amount of methanol was added to a reaction solution after a hydrogenation reaction to precipitate the block copolymer for recovery. The block copolymer was then extracted with acetone, and the extracted solution was dried in vacuum, and the resultant was used as a sample for $^1$H-NMR measurement. The conditions for $^1$H-NMR measurement are as follows.

(Measurement conditions)

measurement apparatus: JNM-LA400 (manufactured by JEOL Ltd.)
solvent: deuterated chloroform
measurement sample: sampled products before and after hydrogenation of polymer
sample concentration: 50 mg/mL
observation frequency: 400 MHz
chemical shift reference: TMS (tetramethylsilane)
pulse delay: 2.904 seconds
number of scans: 64
pulse width: 45°
measurement temperature: 26°C

<(1-7) Viscosity in 15% by mass toluene solution>

The viscosity in a 15% by mass toluene solution was measured with a Cannon-Fenske Capillary Viscometer in a thermostatic bath controlled to a temperature of 25°C.

<(2): Measurement of tack performance>

<(2-1): Method for measuring tack strength>

(Thermoplastic elastomer and each composition)

Each of thermoplastic elastomers 1 to 6 and compositions 1 to 8 was dissolved in toluene. A polyester film (thickness: 38 $\mu$m) was coated with the resultant toluene solution with use of an applicator, and thereafter the film was retained at a room temperature for 30 minutes and then in an oven at 70°C for 7 minutes to evaporate the toluene completely, and thus a coated film was prepared. The thickness of the coated film was 25 $\mu$m. The resultant coated film was cut into a width of 15 mm. In accordance with JIS Z0237 test method 1 for measuring peel tack strength: 180°-peeling test with respect to test plates, the film was pressurized with a roller in a state where the coated surface was in contact with a stainless plate (SUS304), and the film was peeled off after 30 minutes from the pressurization and measured for tack strength. The test was carried out at a peeling speed of 300 mm/min.

(Two-layer film)

Each of two-layer films 1 to 14 was cut into a width of 25 mm. In accordance with JIS 0237 test method 1 for measuring peel tack strength: 180°-peeling test with respect to test plates, the film was pressurized with a roller in a state where a pressure-sensitive adhesive layer was in contact with a stainless plate (SUS304), and the film was peeled off after 30 minutes from the pressurization and measured for tack strength. The test was carried out at a peeling speed of 300 mm/min.

(Three-layer film)

Each of three-layer films 1 to 4 was heat-sealed under conditions of 150°C, 0.2 MPa, 8 seconds, and a width of 4 mm in a state where a heat-sealing layer was in contact with a polyethylene plate (thickness: 1 mm). Then, the film was peeled off at 23°C, 180°, and a peeling speed of 300 mm/min and measured for tack strength to measure initial peel strength.

Then, the peeled site was resealed by pressure bonding with fingers, and this operation was repeated three times. Then, the film was peeled off again at 23°C, 180°, and a peeling speed of 300 mm/min and measured for tack strength to measure resealing peel strength.

<(2-2): Method for measuring tack>

(Thermoplastic elastomer and each composition)

Each of thermoplastic elastomers 1 to 6 and compositions 1 to 8 was dissolved in toluene. A polyester film (thickness: 38 $\mu$m) was coated with the resultant toluene solution with use of an applicator, and thereafter the film was retained at a room temperature for 30 minutes and then in an oven at 70°C for 7 minutes to evaporate the toluene completely, and thus a coated film was prepared. The thickness of the coated film was 25 $\mu$m. The resultant coated film was cut into a width of 15 mm. The film was placed on the top surface of a 10 g weight (hollowed cylinder) of a probe tack tester (NTS-4800, manufactured by TESTER SANGYO CO., LTD.) so that the coated surface was on the lower side. To the coated surface, a cylinder (made of an SUS) with a diameter of 5 mm$\phi$ was allowed to adhere from the lower side for 1 second so as to lift up. Thereafter, the peel strength when the cylinder was detached off was measured. The adhering and detaching speeds were each 10 mm/sec.

(Two-layer film)

Each of two-layer films 1 to 14 was cut into a width of 25 mm. The film was placed on the top surface of a 10 g weight (hollowed cylinder) of a probe tack tester (NTS-4800, manufactured by TESTER SANGYO CO., LTD.) so that the pressure-sensitive adhesive layer side was on the lower side. To the pressure-sensitive adhesive layer side, a cylinder (made of an SUS) with a diameter of 5 mm$\phi$ was allowed to adhere from the lower side for 1 second so as to lift up. Thereafter, the peel strength when the cylinder was detached off was measured. The adhering and detaching speeds were each 10 mm/sec.

<(3): Measurement of average particle major axis and average particle minor axis>

20 particles of each of thermoplastic elastomers 1 to 6 and compositions 1 to 8 were randomly selected, and the largest diameter and the smallest diameter of each particle were measured by using calipers. The average of the largest diameters of the 20 particles was defined as an average particle major axis, and the average of the smallest diameters thereof was defined as an average particle minor axis.

<(4): Measurement of average particle weight>

20 particles of each of thermoplastic elastomers 1 to 6 and compositions 1 to 8 were randomly selected, and the weight of each particle was measured by using a precision balance. The average of the weights of the 20 particles was defined as an average particle weight.

<(5) Method for evaluating oil bleeding characteristics>

Each of dry-blend compositions 15 to 18 was dissolved in toluene. A polyester film (thickness: 38 $\mu$m) was coated with the resultant toluene solution with use of an applicator, and thereafter the film was retained at a room temperature for 30 minutes and then in an oven at 70°C for 7 minutes to evaporate the toluene completely, and thus a coated film was prepared. The thickness of the coated film was 25 $\mu$m. The resultant coated film was cut into a size of 50 mm × 50 mm and pasted on a copy paper. The copy paper on which the coated film was pasted was sandwiched between two glass plates having a thickness of 5 mm, and the resultant was heated at 60°C for 3 days. After the heating, the laminate side was visually observed from the backside of the copy paper to observe the presence or absence of change in the color of the paper.
The case that the change in the color of the paper was able to be observed was determined as × because a plasticizer was determined to bleed to discolor the paper; the case that the change in the color was not able to be observed was determined as O.

<(6) Method for evaluating odor intensity>

5 g each of dry-blend compositions 10 to 12 and 14 was collected into a 70 ml mayonnaise bottle. The mayonnaise bottle was covered with aluminum foil having air holes and heated in an oven at 160°C for 2 hours. The mayonnaise bottle thus heated was taken out of the oven and uncovered by removing the aluminum foil, and sensory evaluation of odor was carried out. Odor intensity was scored as described below, and the average of the scores given by 5 persons was defined as odor intensity.

Score 0: No odor
Score 1: Barely perceivable odor
Score 2: Weak but perceivable odor
Score 3: Readily perceivable odor
Score 4: Strong odor
Score 5: Very strong odor

[Preparation of hydrogenation catalyst]

A hydrogenation catalyst to be used for preparing a hydrogenated thermoplastic elastomer in Examples and Comparative Examples described later was prepared in accordance with the following method. A reaction vessel provided with a stirrer was purged with nitrogen, and into the reaction vessel 1 L of dried and purified cyclohexane was charged. Next, 100 mmol of bis($\eta$5-cyclopentadienyl)titanium dichloride was added thereto. While thoroughly stirring this, an N-hexane solution containing 200 mmol of trimethylaluminum was added thereto to allow to react at a room temperature for about 3 days. Thereby, a hydrogenation catalyst was obtained.

[Preparation of thermoplastic elastomer]

<Thermoplastic elastomer 1>

A 10 L stainless steel autoclave provided with a stirrer and a jacket was washed, dried and purged with nitrogen, and into the autoclave 4480 g of cyclohexane and 240 g of styrene which had been purified in advance were charged, thereafter TMEDA was added thereto so that the mole ratio to the total amount by mole of n-butyllithium was 0.33 (1.04 g in weight), and the content was warmed to 53°C by passing a warm water through the jacket. Subsequently, a cyclohexane solution containing 1.79 g of n-butyllithium was added thereto to initiate polymerization of styrene. The solution temperature increased due to the polymerization of styrene, and 5 minutes after the reaction temperature reached to the maximum temperature of 58°C, 560 g of 1,3-butadiene was added thereto and the polymerization was allowed to continue. 3 minutes after the reaction temperature reached to the maximum temperature of 88°C, ethyl benzoate as a coupling agent was added thereto so that the mole ratio to the total amount by mole of the n-butyllithium was 0.150 (0.35 g in weight) to allow for a coupling reaction for 15 minutes. The average reaction temperature during the reaction was 71°C. The reaction was deactivated by adding 0.4 g of methanol 15 minutes after the addition of the coupling agent. To the block copolymer composition obtained, the hydrogenation catalyst prepared in a manner as described above was further added in an amount of 50 ppm in terms of Ti per 100 parts by mass of the block copolymer, and the resultant was allowed to undergo a hydrogenation reaction at a hydrogen pressure of 0.8 MPa and an average temperature of 87°C. The ratio of hydrogenation of the block copolymer composition obtained was 47.1% by mass. To the block copolymer solution obtained, octadecyl-3-(3,5-di-t-butyl-4-hydroxyphenyl)propionate was added in an amount of 0.25 parts by mass based on 100 parts by mass of the block copolymer, and the solution was thoroughly stirred. The solvent was then removed by heating, and the resultant was pelletized to obtain a thermoplastic elastomer 1 (block copolymer composition 1). With regard to the thermoplastic elastomer 1 (block copolymer composition 1) obtained, the content of the vinyl aromatic monomer unit was 30.1% by mass, and the average content of vinyl bonding in the conjugated diene monomer unit was 40.5% by mass. Other physical property values of the thermoplastic elastomer 1 (block copolymer composition 1) obtained are shown in Table 1.

<Thermoplastic elastomer 2>

A 10 L stainless steel autoclave provided with a stirrer and a jacket was washed, dried and purged with nitrogen, and into the autoclave 4480 g of cyclohexane and 128 g of styrene which had been purified in advance were charged, thereafter TMEDA was added thereto so that the mole ratio to the total amount by mole of n-butyllithium was 0.28 (0.68 g in weight), and the content was warmed to 53°C by passing a warm water through the jacket. Subsequently, a cyclohexane solution containing 1.37 g of n-butyllithium was added thereto to initiate polymerization of styrene. The solution temperature increased due to the polymerization of styrene, and 5 minutes after the reaction temperature reached to the maximum temperature of 58°C, 672 g of 1,3-butadiene was added thereto and the polymerization was allowed to continue. 3 minutes after the reaction temperature reached to the maximum temperature of 88°C, tetraethoxysilane as a coupling agent was added thereto so that the mole ratio to the total amount by mole of the n-butyllithium was 0.086 (0.31 g in weight) to allow for a coupling reaction for 20 minutes. The average reaction temperature during the reaction was 71°C. The reaction was deactivated by adding 0.4 g of methanol 20 minutes after the addition of the coupling agent. To the block copolymer composition obtained, the hydrogenation catalyst prepared in a manner as described above was further added in an amount of 50 ppm in terms of Ti per 100 parts by mass of the block copolymer, and the resultant was allowed to undergo a hydrogenation reaction at a hydrogen pressure of 0.8 MPa and an average temperature of 87°C. The ratio of hydrogenation of the block copolymer composition obtained was 43.2% by mass. To the block copolymer solution obtained, octadecyl-3-(3,5-di-t-butyl-4-hydroxyphenyl)propionate and 2,4-bis(octylthiomethyl)-6-methylphenol were added in amounts of 0.30 parts by mass and 0.03 parts by mass, respectively, based on 100 parts by mass of the block copolymer, and the solution was thoroughly stirred. The solvent was then removed by heating to obtain a crumblike thermoplastic elastomer 2 (block copolymer composition 2). With regard to the thermoplastic elastomer 2 (block copolymer composition 2) obtained, the content of the vinyl aromatic monomer unit was 16.3% by mass, and the average content of vinyl bonding in the conjugated diene monomer unit was 32.5% by mass. Other physical property values of the thermoplastic elastomer 2 (block copolymer composition 2) obtained are shown in Table 1.

<Thermoplastic elastomer 3>

The thermoplastic elastomer 2 was pelletized to obtain a thermoplastic elastomer 3 (block copolymer composition 3). Other physical property values of the thermoplastic elastomer 3 (block copolymer composition 3) obtained are shown in Table 1.

<Thermoplastic elastomer 4>

In the method for producing the thermoplastic elastomer 2, the hydrogenation reaction was not carried out after the deactivation of the reaction by adding methanol, and to the block copolymer solution obtained, octadecyl-3-(3,5-di-t-butyl-4-hydroxyphenyl)propionate and 2,4-bis(octylthiomethyl)-6-methylphenol were added in amounts of 0.30 parts by mass and 0.03 parts by mass, respectively, based on 100 parts by mass of the block copolymer, and the solution was thoroughly stirred. The solvent was then removed by heating, and the resultant was pelletized to obtain a thermoplastic elastomer 4 (block copolymer composition 4). Other physical property values of the thermoplastic elastomer 4 (block copolymer composition 4) obtained are shown in Table 1.

<Thermoplastic elastomer 5>

In the method for producing the thermoplastic elastomer 2, the hydrogenation reaction was carried out in the same manner as described therein except that the hydrogenation catalyst was added in an amount of 100 ppm in terms of Ti per 100 parts by mass of the block copolymer. The ratio of hydrogenation of the block copolymer composition obtained was 97.8% by mass. To the block copolymer solution obtained, octadecyl-3-(3,5-di-t-butyl-4-hydroxyphenyl)propionate and 2,4-bis(octylthiomethyl)-6-methylphenol were added in amounts of 0.30 parts by mass and 0.03 parts by mass, respectively, based on 100 parts by mass of the block copolymer, and the solution was thoroughly stirred. The solvent was then removed by heating, and the resultant was pelletized to obtain a thermoplastic elastomer 5 (block copolymer composition 5). Other physical property values of the thermoplastic elastomer 5 (block copolymer composition 5) obtained are shown in Table 1.

<Thermoplastic elastomer 6>

A thermoplastic elastomer 6 (block copolymer composition 6) was obtained in the same manner as in the thermoplastic elastomer 3 except that a smaller particle shape was formed in the method for producing the thermoplastic elastomer 3. Other physical property values of the thermoplastic elastomer 6 (block copolymer composition 6) obtained are shown in Table 1.

[Preparation of composition for pressure-sensitive adhesive]

[Example 1-1]

A thermoplastic elastomer 1 (100 parts by weight) as a thermoplastic elastomer, YS RESIN PX1150N (233 parts by weight) manufactured by YASUHARA CHEMICAL CO., LTD. as a tackifier, and IRGANOX #1010 (0.5 parts by weight) manufactured by Ciba Specialty Chemicals Inc. as an antioxidant were kneaded at 160°C by using a twin-screw extruder to obtain a kneaded product. The obtained kneaded product was extruded into water, molded into pellets with a cutter in water, and dried in a continuous dryer to obtain a composition 1. The values of other physical properties of the composition 1 are shown in Table 2.

[Example 1-2]

A composition 2 was obtained in the same manner as in the composition 1 except that a thermoplastic elastomer 2 (100 parts by weight) was used as the thermoplastic elastomer. The values of other physical properties of the composition 2 are shown in Table 2.

[Example 1-3]

A thermoplastic elastomer 1 (100 parts by weight) as a thermoplastic elastomer, YS RESIN PX1150N (233 parts by weight) manufactured by YASUHARA CHEMICAL CO., LTD. as a tackifier, and IRGANOX #1010 (0.5 parts by weight) manufactured by Ciba Specialty Chemicals Inc. as an antioxidant were kneaded at 160°C by using a twin-screw extruder to obtain a kneaded product. The obtained kneaded product was cooled and crushed to obtain a composition 3. The values of other physical properties of the composition 3 are shown in Table 2.

[Example 1-4]

A composition 4 was obtained in the same manner as in the composition 3 except that a thermoplastic elastomer 2 (100 parts by weight) was used as the thermoplastic elastomer. The values of other physical properties of the composition 4 are shown in Table 2.

[Example 1-5]

A composition 5 was obtained in the same manner as in the composition 1 except that a thermoplastic elastomer 4 (100 parts by weight) was used as the thermoplastic elastomer. The values of other physical properties of the composition 5 are shown in Table 2.

[Example 1-6]

A composition 6 was obtained in the same manner as in the composition 1 except that a thermoplastic elastomer 5 (100 parts by weight) was used as the thermoplastic elastomer. The values of other physical properties of the composition 6 are shown in Table 2.

[Example 1-7]

A composition 7 was obtained in the same manner as in the composition 1 except that SIS Kraton D1161 (100 parts by weight) manufactured by Kraton Performance Polymers, Inc. was used as the thermoplastic elastomer. The values of other physical properties of the composition 7 are shown in Table 2.

[Reference Example 1-1]

A thermoplastic elastomer 2 (100 parts by weight) as a thermoplastic elastomer, Diana Process Oil PW-90 (60 parts by weight) manufactured by Idemitsu Kosan Co., Ltd. as a softener, and IRGANOX #1010 (0.5 parts by weight) manufactured by Ciba Specialty Chemicals Inc. as an antioxidant were kneaded at 160°C by using a twin-screw extruder to obtain a kneaded product. The obtained kneaded product was extruded into water, molded into pellets with a cutter in water, and dried in a continuous dryer to obtain a composition 8. The values of other physical properties of the composition 8 are shown in Table 2.

<Dry-blend composition 1>

A composition 1 (100 parts by weight) as composition C and a thermoplastic elastomer 1 (110 parts by weight) as composition E were dry-blended to prepare a dry-blend composition 1. The values of other physical properties of the dry-blend composition 1 are shown in Table 3.

<Dry-blend composition 2>

A composition 1 (100 parts by weight) as composition C and a thermoplastic elastomer 1 (70 parts by weight) as composition E were dry-blended to prepare a dry-blend composition 2. The values of other physical properties of the dry-blend composition 2 are shown in Table 3.

<Dry-blend composition 3>

A composition 2 (100 parts by weight) as composition C and a thermoplastic elastomer 2 (110 parts by weight) as composition E were dry-blended to prepare a dry-blend composition 3. The values of other physical properties of the dry-blend composition 3 are shown in Table 3.

<Dry-blend composition 4>

A composition 2 (100 parts by weight) as composition C and a thermoplastic elastomer 2 (70 parts by weight) as composition E were dry-blended to prepare a dry-blend composition 4. The values of other physical properties of the dry-blend composition 4 are shown in Table 3.

<Dry-blend composition 5>

A composition 2 (100 parts by weight) as composition C and a thermoplastic elastomer 2 (40 parts by weight) as composition E were dry-blended to prepare a dry-blend composition 5. The values of other physical properties of the dry-blend composition 5 are shown in Table 3.

<Dry-blend composition 6>

A composition 2 (100 parts by weight) as composition C and a thermoplastic elastomer 2 (16 parts by weight) as composition E were dry-blended to prepare a dry-blend composition 6. The values of other physical properties of the dry-blend composition 6 are shown in Table 3.

<Dry-blend composition 7>

A composition 3 (100 parts by weight) as composition C and a thermoplastic elastomer 1 (70 parts by weight) as composition E were dry-blended to prepare a dry-blend composition 7. The values of other physical properties of the dry-blend composition 7 are shown in Table 3.

<Dry-blend composition 8>

A composition 4 (100 parts by weight) as composition C and a thermoplastic elastomer 2 (70 parts by weight) as composition E were dry-blended to prepare a dry-blend composition 8. The values of other physical properties of the dry-blend composition 8 are shown in Table 3.

<Dry-blend composition 9>

A composition 2 (100 parts by weight) as composition C and a thermoplastic elastomer 3 (70 parts by weight) as composition E were dry-blended to prepare a dry-blend composition 9. The values of other physical properties of the dry-blend composition 9 are shown in Table 3.

<Dry-blend composition 10>

A composition 2 (100 parts by weight) as composition C and a thermoplastic elastomer 3 (40 parts by weight) as composition E were dry-blended to prepare a dry-blend composition 10. The values of other physical properties of the dry-blend composition 10 are shown in Table 3.

<Dry-blend composition 11>

A composition 5 (100 parts by weight) as composition C and a thermoplastic elastomer 4 (40 parts by weight) as composition E were dry-blended to prepare a dry-blend composition 11. The values of other physical properties of the dry-blend composition 11 are shown in Table 3.

<Dry-blend composition 12>

A composition 6 (100 parts by weight) as composition C and a thermoplastic elastomer 5 (40 parts by weight) as composition E were dry-blended to prepare a dry-blend composition 12. The values of other physical properties of the dry-blend composition 12 are shown in Table 3.

<Dry-blend composition 13>

A composition 4 (100 parts by weight) as composition C and a thermoplastic elastomer 6 (70 parts by weight) as composition E were dry-blended to prepare a dry-blend composition 13. The values of other physical properties of the dry-blend composition 13 are shown in Table 3.

<Dry-blend composition 14>

A composition 8 (100 parts by weight) as composition C and SIS Kraton D1161 (40 parts by weight) manufactured by Kraton Performance Polymers, Inc. as composition E were dry-blended to prepare a dry-blend composition 14. The values of other physical properties of the dry-blend composition 14 are shown in Table 3.

<Dry-blend composition 15>

A composition 2 (100 parts by weight) as composition C and a composition 7 (70 parts by weight) as composition E were dry-blended to prepare a dry-blend composition 15. The values of other physical properties of the dry-blend composition 15 are shown in Table 6.

<Dry-blend composition 16>

A composition 2 (100 parts by weight) as composition C and a composition 7 (30 parts by weight) as composition E were dry-blended to prepare a dry-blend composition 16. The values of other physical properties of the dry-blend composition 16 are shown in Table 6.

<Dry-blend composition 17>

A composition 2 (100 parts by weight) as composition C and a composition 7 (20 parts by weight) as composition E were dry-blended to prepare a dry-blend composition 17. The values of other physical properties of the dry-blend composition 17 are shown in Table 6.

<Dry-blend composition 18>

A composition 2 (100 parts by weight) as composition C and a composition 7 (10 parts by weight) as composition E were dry-blended to prepare a dry-blend composition 18. The values of other physical properties of the dry-blend composition 18 are shown in Table 6.

[Example 1]

A dry-blend composition 1 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 1 having a thickness of the base material layer of 50 $\mu$m and a thickness of the pressure-sensitive adhesive layer of 10 $\mu$m. The values of other physical properties of the two-layer film 1 are shown in Table 4.

[Example 2]

A dry-blend composition 2 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 2 having a thickness of the base material layer of 49 $\mu$m and a thickness of the pressure-sensitive adhesive layer of 12 $\mu$m. The values of other physical properties of the two-layer film 2 are shown in Table 4.

[Example 3]

A dry-blend composition 3 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 3 having a thickness of the base material layer of 51 $\mu$m and a thickness of the pressure-sensitive adhesive layer of 11 $\mu$m. The values of other physical properties of the two-layer film 3 are shown in Table 4.

[Example 4]

A dry-blend composition 4 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 4 having a thickness of the base material layer of 49 $\mu$m and a thickness of the pressure-sensitive adhesive layer of 13 $\mu$m. The values of other physical properties of the two-layer film 4 are shown in Table 4.

[Example 5]

A dry-blend composition 5 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 5 having a thickness of the base material layer of 53 $\mu$m and a thickness of the pressure-sensitive adhesive layer of 10 $\mu$m. The values of other physical properties of the two-layer film 5 are shown in Table 4.

[Example 6]

A dry-blend composition 6 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 6 having a thickness of the base material layer of 49 μm and a thickness of the pressure-sensitive adhesive layer of 12 μm. The values of other physical properties of the two-layer film 6 are shown in Table 4.

[Example 7]

A dry-blend composition 7 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 7 having a thickness of the base material layer of 50 μm and a thickness of the pressure-sensitive adhesive layer of 11 μm. The values of other physical properties of the two-layer film 7 are shown in Table 4.

[Example 8]

A dry-blend composition 8 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 8 having a thickness of the base material layer of 49 μm and a thickness of the pressure-sensitive adhesive layer of 12 μm. The values of other physical properties of the two-layer film 8 are shown in Table 4.

[Example 9]

A dry-blend composition 9 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 9 having a thickness of the base material layer of 50 μm and a thickness of the pressure-sensitive adhesive layer of 12 μm. The values of other physical properties of the two-layer film 9 are shown in Table 4.

[Example 10]

A dry-blend composition 10 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 10 having a thickness of the base material layer of 51 μm and a thickness of the pressure-sensitive adhesive layer of 12 μm. The values of other physical properties of the two-layer film 10 are shown in Table 4.

[Example 11]

A dry-blend composition 11 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 11 having a thickness of the base material layer of 50 μm and a thickness of the pressure-sensitive adhesive layer of 11 μm. The values of other physical properties of the two-layer film 11 are shown in Table 4.

[Example 12]

A dry-blend composition 12 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 12 having a thickness of the base material layer of 49 μm and a thickness of the pressure-sensitive adhesive layer of 12 μm. The values of other physical properties of the two-layer film 12 are shown in Table 4.

[Example 13]

A dry-blend composition 13 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 13 having a thickness of the base material layer of 51 μm and a thickness of the pressure-sensitive adhesive layer of 12 $\mu$m. The values of other physical properties of the two-layer film 13 are shown in Table 4.

[Example 14]

A dry-blend composition 14 as a pressure-sensitive adhesive layer and polypropylene (manufactured by SunAllomer Ltd., trade name "PC684S", MFR (230°C, a 2.16 kg weight) = 7.5 g/10 min) as a base material layer were used, and both the layers were integrated and coextruded by using the coextrusion method in a T-die system to prepare a two-layer film 14 having a thickness of the base material layer of 51 $\mu$m and a thickness of the pressure-sensitive adhesive layer of 12 $\mu$m. The values of other physical properties of the two-layer film 14 are shown in Table 4.

[Example 15]

A dry-blend composition 4 as a pressure-sensitive adhesive layer, polypropylene (manufactured by SunAllomer Ltd., trade name "PC684S", MFR (230°C, a 2.16 kg weight) = 7.5 g/10 min) as a base material layer, and low-density polyethylene (manufactured by Asahi Kasei Corp., trade name "SUNTEC L2340", MFR (190°C, a 2.16 kg weight) = 3.8 g/10 min)) as a heat-sealing layer were used, and these layers were integrated and coextruded by using the coextrusion method in a T-die system such that the pressure-sensitive adhesive layer was the middle layer among the three layers to prepare a three-layer film 1 having a thickness of the base material layer of 82 $\mu$m, a thickness of the pressure-sensitive adhesive layer of 32 $\mu$m, and a thickness of the heat-sealing layer of 23 $\mu$m. The values of other physical properties of the three-layer film 1 are shown in Table 5.

[Example 16]

A dry-blend composition 5 as a pressure-sensitive adhesive layer, polypropylene (manufactured by SunAllomer Ltd., trade name "PC684S", MFR (230°C, a 2.16 kg weight) = 7.5 g/10 min) as a base material layer, and low-density polyethylene (manufactured by Asahi Kasei Corp., trade name "SUNTEC L2340", MFR (190°C, a 2.16 kg weight) = 3.8 g/10 min)) as a heat-sealing layer were used, and these layers were integrated and coextruded by using the coextrusion method in a T-die system such that the pressure-sensitive adhesive layer was the middle layer among the three layers to prepare a three-layer film 2 having a thickness of the base material layer of 85 $\mu$m, a thickness of the pressure-sensitive adhesive layer of 25 $\mu$m, and a thickness of the heat-sealing layer of 24 $\mu$m. The values of other physical properties of the three-layer film 2 are shown in Table 5.

[Example 17]

A dry-blend composition 9 as a pressure-sensitive adhesive layer, polypropylene (manufactured by SunAllomer Ltd., trade name "PC684S", MFR (230°C, a 2.16 kg weight) = 7.5 g/10 min) as a base material layer, and low-density polyethylene (manufactured by Asahi Kasei Corp., trade name "SUNTEC L2340", MFR (190°C, a 2.16 kg weight) = 3.8 g/10 min)) as a heat-sealing layer were used, and these layers were integrated and coextruded by using the coextrusion method in a T-die system such that the pressure-sensitive adhesive layer was the middle layer among the three layers to prepare a three-layer film 3 having a thickness of the base material layer of 85 $\mu$m, a thickness of the pressure-sensitive adhesive layer of 28 $\mu$m, and a thickness of the heat-sealing layer of 24 $\mu$m. The values of other physical properties of the three-layer film 3 are shown in Table 5.

[Example 18]

A dry-blend composition 10 as a pressure-sensitive adhesive layer, polypropylene (manufactured by SunAllomer Ltd., trade name "PC684S", MFR (230°C, a 2.16 kg weight) = 7.5 g/10 min) as a base material layer, and low-density polyethylene (manufactured by Asahi Kasei Corp., trade name "SUNTEC L2340", MFR (190°C, a 2.16 kg weight) = 3.8 g/10 min)) as a heat-sealing layer were used, and these layers were integrated and coextruded by using the coextrusion method in a T-die system such that the pressure-sensitive adhesive layer was the middle layer among the three layers to prepare a three-layer film 4 having a thickness of the base material layer of 83 $\mu$m, a thickness of the pressure-sensitive adhesive layer of 26 $\mu$m, and a thickness of the heat-sealing layer of 24 $\mu$m. The values of other physical properties of the three-layer film 4 are shown in Table 5.

[Examples 1 to 18]

Thermoplastic elastomers, integrated compositions including a thermoplastic elastomer and a tackifier, two-layer films, and three-layer films were obtained in the above. The obtained samples were evaluated by using the above-described methods. The evaluation results are shown in Tables 1 to 5.

[Examples 3-1 to 3-4]

The oil bleeding characteristics of pressure-sensitive layers prepared by using the softener-containing dry-blend compositions thus obtained in the above were evaluated by using the above-described method. The results are shown in Table 6.

[Examples 4-1 to 4-4]

The odor intensity of a thermoplastic elastomer having a structure resulting from polymerization of 1,3-butadiene as a conjugated diene monomer unit, and a thermoplastic elastomer having a structure resulting from polymerization of 2-methyl-1,3-butadiene (isoprene) was evaluated by using the dry-blend compositions thus obtained in the above. The evaluation results are shown in Table 7.

[Table 1]

| Thermoplastic elastomer | 1 | 2 | 3 | 4 | 5 | 6 |
|---|---|---|---|---|---|---|
| Content of vinyl aromatic monomer unit (% by mass) | 30.1 | 16.3 | 16.3 | 16.3 | 16.3 | 16.3 |
| Average content of vinyl bonding in conjugated diene monomer unit (% by mass) | 40.5 | 32.5 | 32.5 | 32.4 | 32.5 | 32.5 |
| Molecular weight of block copolymer (c) (10000 ×) | 6.2 | 9.5 | 9.5 | 9.6 | 9.5 | 9.5 |
| Molecular weight of block copolymer (g-1) (10000 ×) | 12.0 | 20.5 | 20.5 | 20.6 | 20.4 | 20.4 |
| Molecular weight of block copolymer (g-2) (10000 ×) | - | 30.2 | 30.2 | 30.4 | 30.1 | 30.1 |
| Molecular weight of block copolymer (g-3) (10000 ×) | - | 36.6 | 36.6 | 36.8 | 36.5 | 36.5 |
| Content of block copolymer (c) (% by mass) | 65.3 | 64.3 | 64.3 | 64.2 | 64.4 | 64.4 |
| Content of block copolymer (g-1) (% by mass) | 34.7 | 6.6 | 6.6 | 6.6 | 6.6 | 6.6 |
| Content of block copolymer (g-2) (% by mass) | 0.0 | 14.5 | 14.5 | 14.6 | 14.5 | 14.5 |
| Content of block copolymer (g-3) (% by mass) | 0.0 | 14.6 | 14.6 | 14.6 | 14.5 | 14.5 |
| Ratio of weight average molecular weight (g-1)/(c):(g-2)/(c):(g-3)/(c) | 1.94:0:0 | 2.16:3.18:3.85 | 2.16:3.18:3.85 | 2.15:3.17:3.83 | 2.15:3.17:3.84 | 2.15:3.17:3.84 |
| Ratio of area (c): (g-1): (g-2): (g-3) | 0.635:0.347:0:0 | 0.643:0.066:0.145:0.146 | 0.643:0.066:0.145:0.146 | 0.642:0.066:0.146:0.146 | 0.644:0.066:0.145:0.145 | 0.644:0.066:0.145:0.145 |
| Total ratio of hydrogenation of unsaturated double bonds based on conjugated diene compound (% by mass) | 47 | 43 | 43 | 0 | 98 | 43 |
| Shape | Pellet | Crumb | Pellet | Pellet | Pellet | Pellet |
| Average particle major axis (mm) | 4.08 | 3.65 | 4.08 | 4.10 | 4.07 | 2.7 |

(continued)

| Thermoplastic elastomer | 1 | 2 | 3 | 4 | 5 | 6 |
|---|---|---|---|---|---|---|
| Average particle minor axis (mm) | 2.72 | 2.48 | 2.74 | 2.81 | 2.78 | 1.8 |
| Average particle weight (mg) | 22.1 | 18.8 | 22.6 | 22.8 | 22.7 | 7.0 |
| Tack strength (N/10 mm) | 0.0 | 0.0 | 0.0 | 0.0 | 0.0 | 0.0 |
| Tack (N/5 mmcp) | 0.0 | 0.0 | 0.0 | 0.0 | 0.0 | 0.0 |

[Table 2]

| | Example | | | | | | | Reference Example |
|---|---|---|---|---|---|---|---|---|
| | 1-1 | 1-2 | 1-3 | 1-4 | 1-5 | 1-6 | 1-7 | 1-1 |
| Composition | 1 | 2 | 3 | 4 | 5 | 6 | 7 | 8 |
| Content of thermoplastic elastomer 1 (parts by weight) | 100 | 0 | 100 | 0 | 0 | 0 | 0 | 0 |
| Content of thermoplastic elastomer 2 (parts by weight) | 0 | 100 | 0 | 100 | 0 | 0 | 0 | 100 |
| Content of thermoplastic elastomer 4 (parts by weight) | 0 | 0 | 0 | 0 | 100 | 0 | 0 | 0 |
| Content of thermoplastic elastomer 5 (parts by weight) | 0 | 0 | 0 | 0 | 0 | 100 | 0 | 0 |
| Content of SIS (Kraton D1161 manufactured by Kraton Performance Polymers, Inc.) (parts by weight) | 0 | 0 | 0 | 0 | 0 | 0 | 100 | 0 |
| Content of YS RESIN PX1150N (parts by weight) | 233 | 233 | 233 | 233 | 233 | 233 | 233 | 0 |
| Diana Process Oil PW-90 (parts by weight) | 0 | 0 | 0 | 0 | 0 | 0 | 0 | 60 |
| Ratio of total weight of tackifier to total weight of thermoplastic elastomer (total weight of tackifier/ total weight of thermoplastic elastomer) | 2.33 | 2.33 | 2.33 | 2.33 | 2.33 | 2.33 | 2.33 | 0 |
| Total content of thermoplastic elastomer (% by mass) | 30.0 | 30.0 | 30.0 | 30.0 | 30.0 | 30.0 | 30.0 | 62.5 |
| Total content of tackifier (% by mass) | 70.0 | 70.0 | 70.0 | 70.0 | 70.0 | 70.0 | 70.0 | 0.0 |
| Shape | Pellet | Pellet | Pellet | Pellet | Pellet | Pellet | Pellet | Pellet |
| Average particle major axis (mm) | 4.19 | 4.00 | 3.15 | 2.89 | 4.11 | 4.02 | 4.05 | 4.06 |
| Average particle minor axis (mm) | 3.44 | 3.19 | 2.14 | 1.91 | 3.24 | 3.18 | 3.23 | 3.20 |
| Average particle weight (g) | 30.4 | 26.0 | 11.1 | 7.9 | 27.9 | 27.7 | 27.6 | 27.3 |
| Tack strength (N/10 mm) | 0.0 | 0.0 | 0.0 | 0.0 | 0.0 | 0.0 | 0.0 | 0.0 |
| Tack (N/5 mm$\varphi$) | 0.0 | 0.0 | 0.0 | 0.0 | 0.0 | 0.0 | 0.0 | 0.0 |

[Table 3]

| Example | | 2-1 | 2-2 | 2-3 | 2-4 | 2-5 | 2-6 | 2-7 | 2-8 | 2-9 | 2-10 | 2-11 | 2-12 | 2-13 | 2-14 |
|---|---|---|---|---|---|---|---|---|---|---|---|---|---|---|---|
| Dry-blend composition (material for pressure-sensitive adhesive) | | 1 | 2 | 3 | 4 | 5 | 6 | 7 | 8 | 9 | 10 | 11 | 12 | 13 | 14 |
| Composition C | Content of composition 1 (parts by weight) | 100 | 100 | 0 | 0 | 0 | 0 | 0 | 0 | 0 | 0 | 0 | 0 | 0 | 0 |
| | Content of composition 2 (parts by weight) | 0 | 0 | 100 | 100 | 100 | 100 | 0 | 0 | 100 | 100 | 0 | 0 | 0 | 0 |
| | Content of composition 3 (parts by weight) | 0 | 0 | 0 | 0 | 0 | 0 | 100 | 0 | 0 | 0 | 0 | 0 | 0 | 0 |
| | Content of composition 4 (parts by weight) | 0 | 0 | 0 | 0 | 0 | 0 | 0 | 100 | 0 | 0 | 0 | 0 | 100 | 0 |
| | Content of composition 5 (parts by weight) | 0 | 0 | 0 | 0 | 0 | 0 | 0 | 0 | 0 | 0 | 100 | 0 | 0 | 0 |
| | Content of composition 6 (parts by weight) | 0 | 0 | 0 | 0 | 0 | 0 | 0 | 0 | 0 | 0 | 0 | 100 | 0 | 0 |
| | Content of composition 8 (parts by weight) | 0 | 0 | 0 | 0 | 0 | 0 | 0 | 0 | 0 | 0 | 0 | 0 | 0 | 100 |

(continued)

| Example | | 2-1 | 2-2 | 2-3 | 2-4 | 2-5 | 2-6 | 2-7 | 2-8 | 2-9 | 2-10 | 2-11 | 2-12 | 2-13 | 2-14 |
|---|---|---|---|---|---|---|---|---|---|---|---|---|---|---|---|
| Composition E | Content of thermoplastic elastomer 1 (parts by weight) | 110 | 70 | 0 | 0 | 0 | 0 | 70 | 0 | 0 | 0 | 0 | 0 | 0 | 0 |
| | Content of thermoplastic elastomer 2 (parts by weight) | 0 | 0 | 110 | 70 | 40 | 16 | 0 | 70 | 0 | 0 | 0 | 0 | 0 | 0 |
| | Content of thermoplastic elastomer 3 (parts by weight) | 0 | 0 | 0 | 0 | 0 | 0 | 0 | 0 | 70 | 40 | 0 | 0 | 0 | 0 |
| | Content of thermoplastic elastomer 4 (parts by weight) | 0 | 0 | 0 | 0 | 0 | 0 | 0 | 0 | 0 | 0 | 40 | 0 | 0 | 0 |
| | Content of thermoplastic elastomer 5 (parts by weight) | 0 | 0 | 0 | 0 | 0 | 0 | 0 | 0 | 0 | 0 | 0 | 40 | 0 | 0 |
| | Content of thermoplastic elastomer 6 (parts by weight) | 0 | 0 | 0 | 0 | 0 | 0 | 0 | 0 | 0 | 0 | 0 | 0 | 70 | 0 |
| | Content of SIS (Kraton D1161 manufactured by Kraton Performance Polymers, Inc.) (parts by weight) | 0 | 0 | 0 | 0 | 0 | 0 | 0 | 0 | 0 | 0 | 0 | 0 | 0 | 40 |
| Ratio of average particle weight We of composition E to average particle weight Wc of composition C (Wc/We) | | 1.38 | 1.38 | 1.38 | 1.38 | 1.38 | 138 | 0.50 | 0.42 | 1.15 | 1.15 | 1.22 | 1.22 | 1.13 | 1.08 |
| Ratio of average particle major axis Le of composition E to average particle major axis Lc of composition C (Lc/Le) | | 1.03 | 1.03 | 1.10 | 1.10 | 1.10 | 1.10 | 0.77 | 0.78 | 0.98 | 0.98 | 1.00 | 0.99 | 1.07 | 1.13 |
| Ratio of average particle minor axis le of composition E to average particle minor axis lc of composition C (lc/le) | | 1.26 | 1.26 | 1.29 | 1.29 | 1.29 | 1.29 | 0.79 | 0.77 | 1.16 | 1.16 | 1.15 | 1.14 | 1.06 | 1.06 |

(continued)

| Example | 2-1 | 2-2 | 2-3 | 2-4 | 2-5 | 2-6 | 2-7 | 2-8 | 2-9 | 2-10 | 2-11 | 2-12 | 2-13 | 2-14 |
|---|---|---|---|---|---|---|---|---|---|---|---|---|---|---|
| Ratio of amount of composition C to be blended to amount of composition E to be blended (blending weight ratio) (amount of composition C to be blended/ amount of composition E to be blended) | 0.91 | 1.43 | 0.91 | 1.43 | 2.50 | 6.25 | 1.43 | 1.43 | 1.43 | 2.50 | 2.50 | 2.50 | 1.43 | 2.50 |
| Ra t i oof total weight of thermoplastic elastomer in material for pressure-sensitive adhesive (weight of thermoplastic elastomer/total weight of material $\times$ 100) (%) | 66 | 56 | 66 | 56 | 50 | 40 | 56 | 56 | 56 | 50 | 50 | 50 | 56 | 50 |
| Ra t i o of total weight of tackifier in material for pressure-sensitive adhesive (weight of tackifier/total weight of material $\times$ 100) (%) | 34 | 44 | 34 | 44 | 50 | 60 | 44 | 44 | 44 | 50 | 50 | 50 | 44 | 50 |

[Table 4]

|  | Example | | | | | | | | | | | | | |
|---|---|---|---|---|---|---|---|---|---|---|---|---|---|---|
|  | 1 | 2 | 3 | 4 | 5 | 6 | 7 | 8 | 9 | 10 | 11 | 12 | 13 | 14 |
| Two-layer film | 1 | 2 | 3 | 4 | 5 | 6 | 7 | 8 | 9 | 10 | 11 | 12 | 13 | 14 |
| Dry-blend composition used in pressure-sensitive adhesive layer | 1 | 2 | 3 | 4 | 5 | 6 | 7 | 8 | 9 | 10 | 11 | 12 | 13 | 14 |
| Thickness of base material layer ($\mu$m) | 50 | 49 | 51 | 49 | 53 | 49 | 50 | 49 | 50 | 51 | 50 | 49 | 51 | 51 |
| Thickness of pressure-sensitive adhesive layer ($\mu$m) | 10 | 12 | 11 | 13 | 10 | 12 | 11 | 12 | 12 | 12 | 11 | 12 | 12 | 12 |
| Ratioof total weight of thermoplastic elastomer in pressure-sensitive adhesive (% by mass) | 66.7 | 58.8 | 66.7 | 58.8 | 50.0 | 40.0 | 58.8 | 58.8 | 58.8 | 50.0 | 50.0 | 50.0 | 58.8 | 50.0 |
| Ratio of total weight of tackifier in pressure-sensitive adhesive (% by mass) | 33.3 | 41.2 | 33.3 | 41.2 | 50.0 | 60.0 | 41.2 | 41.2 | 41.2 | 50.0 | 50.0 | 50.0 | 41.2 | 50.0 |
| Tack strength (N/10 mm) | 4.1 | 5.8 | 3.9 | 4.5 | 5.2 | 5.5 | 0.1 | 0.3 | 6.2 | 7.1 | 2.2 | 2.7 | 6.1 | 7.2 |
| Tack (N/5 mm$\varphi$) | 0.0 | 0.0 | 0.3 | 0.2 | 0.1 | 0.0 | 0.0 | 0.0 | 0.3 | 0.2 | 0.0 | 0.0 | 0.3 | 0.1 |

[Table 5]

| | | Example | | | |
|---|---|---|---|---|---|
| | | 15 | 16 | 17 | 18 |
| Three-layer film | | 1 | 2 | 3 | 4 |
| Dry-blend composition used in pressure-sensitive adhesive layer | | 4 | 5 | 9 | 10 |
| Thickness of base material layer ($\mu$m) | | 82 | 85 | 85 | 83 |
| Thickness of pressure-sensitive adhesive layer ($\mu$m) | | 32 | 25 | 28 | 26 |
| Thickness of heat-sealing layer ($\mu$m) | | 23 | 24 | 24 | 24 |
| Ratio of total weight of thermoplastic elastomer in pressure-sensitive adhesive (% by mass) | | 58.8 | 50.0 | 58.8 | 50.0 |
| Ratio of total weight of tackifier in pressure-sensitive adhesive (% by mass) | | 41.2 | 50.0 | 41.2 | 50.0 |
| Initial peel strength (N/10 mm) | | 12.3 | 17.5 | 13.4 | 14.3 |
| Resealing peel strength (N/10 mm) | | 1.3 | 1.9 | 2.7 | 3.6 |

[Table 6]

| Example | | 3-1 | 3-2 | 3-3 | 3-4 |
|---|---|---|---|---|---|
| Dry-blend composition | | 15 | 16 | 17 | 18 |
| Composition C | Content of composition 2 (parts by weight) | 100 | 100 | 100 | 100 |
| Composition E | Content of composition 7 (parts by weight) | 70 | 30 | 20 | 10 |
| Ratio of amount of plasticizer based on total amount of dry-blend composition (% by weight) | | 15.4 | 8.7 | 6.3 | 3.4 |
| Oil bleeding characteristics | | × | × | ○ | ○ |

[Table 7]

| Example | 4-1 | 4-2 | 4-3 | 4-4 |
|---|---|---|---|---|
| Dry-blend composition | 10 | 11 | 12 | 14 |
| Odor intensity | 2.8 | 3.3 | 2.6 | 4.2 |

As seen from the results about the two-layer films of Examples 1 to 14, a pressure-sensitive adhesive exhibiting tack strength was able to be formed by dry-blending the composition C and the composition E exhibiting no tack strength and extruding the dry blend by using an extruder. The comparison of Example 2 with Example 7, the comparison of Example 4 with Example 8, and the comparison of Example 8 with Example 13 suggested that closer particle diameters of the respective particles of the compositions to be dry-blended are more preferred. The comparison of Example 4 with Example 9 and the comparison of Example 5 with Example 10 suggested that a pellet shape rather than a crumb shape is more preferred for the form of particles. The comparison of Example 2 with Example 9 suggested that it is preferable that the thermoplastic elastomer include a tribranched form (g-2) and/or a tetrabranched form (g-3) of a diblock copolymer (c). From the results about the three-layer films of Examples 15 to 18, it was found that the method for forming the pressure-sensitive adhesive of the present invention can provide a resealable multilayered film exhibiting high tack strength. The thermoplastic elastomers 1 to 6 and the compositions 1 to 8 used in Examples 1 to 18 had small tack strength and were therefore very easy to handle.

Industrial Applicability

The present invention relates to the use of a composition in a particulate form for a pressure-sensitive adhesive of a multilayered film for resealing packaging, such as for packaging units for cosmetics or sanitary products repetitively openable and resealable for use, or packaging units for food or medicaments in too large amounts to consume at once, for example.

**Claims**

1. Use of a composition in a particulate form for a pressure-sensitive adhesive of a multilayered film for resealing packaging, comprising:

   an integrated form of at least one of thermoplastic elastomer A and at least one of tackifier B, wherein the composition for use in a pressure-sensitive adhesive satisfies following (1):

   (1) a ratio of a total weight of a tackifier to a total weight of a thermoplastic elastomer in the composition is more than 1.5 and 3.0 or less;

   a content of a vinyl aromatic monomer unit in the thermoplastic elastomer A is 10% by mass or more and 40% by mass or less, and
   the thermoplastic elastomer A comprises a polymer block (A) primarily comprising a vinyl aromatic monomer unit and a polymer block (B) primarily comprising a conjugated diene monomer unit,
   wherein the multilayered film includes a pressure-sensitive adhesive layer in a layer other than an outermost layer, and
   the multilayered film includes three or more layers.

2. The use according to claim 1, wherein

   the thermoplastic elastomer A comprises, at a ratio of 10% by mass or more and 90% by mass or less,
   a block copolymer (C) comprising a polymer block (A) primarily comprising a vinyl aromatic monomer unit and a polymer block (B) primarily comprising a conjugated diene monomer unit, wherein a number of the polymer block (A) is 1.

3. The use according to claim 1 or 2, wherein
   percentage H of hydrogenation based on a total amount of unsaturated double bonds derived from a conjugated diene compound in the polymer block (B) is 20% by mole or more and 80% by mole or less.

4. The use according to any one of claims 1 to 3, wherein

   the tackifier B is
   at least one selected from the group consisting of an aromatic modified terpene resin, a terpene-phenol resin, a terpene resin, an aliphatic tackifier, an aromatic petroleum hydrocarbon resin, a C5/C9 copolymer resin, and hydrogenated derivatives thereof.

5. The use according to any one of claims 1 to 4, wherein the composition is included in a material for use in a pressure-sensitive adhesive, said material comprising:

   composition E in a particulate form comprising at least one of thermoplastic elastomer D, wherein
   a tack strength of the material for a pressure-sensitive adhesive having ratio x is more than that of the composition for a pressure-sensitive adhesive of a multilayered film having ratio $\alpha$ and more than that of the composition E having ratio $\beta$, wherein
   x represents a ratio of a total amount of a thermoplastic elastomer to a total amount of a thermoplastic elastomer and a tackifier in the material for a pressure-sensitive adhesive;
   $\alpha$ represents a ratio of a total amount of a thermoplastic elastomer to a total amount of a thermoplastic elastomer and a tackifier in the composition for a pressure-sensitive adhesive of a multilayered film; and
   $\beta$ represents a ratio of a total amount of a thermoplastic elastomer to a total amount of a thermoplastic elastomer and a tackifier in the composition E, and
   the material for a pressure-sensitive adhesive satisfies following expression (1):

$$\alpha < x < \beta \text{ or } \beta < x < \alpha \quad (1).$$

**6.** The use according to claim 5, wherein
the material for a pressure-sensitive adhesive satisfies following (1) and/or (2):

(1) a ratio of average particle weight We of the composition E to average particle weight Wc of the composition for a pressure-sensitive adhesive of a multilayered film is 0.60 or more and 1.40 or less; and
(2) a ratio of average particle major axis Le of the composition E to average particle major axis Lc of the composition for a pressure-sensitive adhesive of a multilayered film is 0.60 or more and 1.40 or less, and a ratio of average particle minor axis le of the composition E to average particle minor axis lc of the composition for a pressure-sensitive adhesive of a multilayered film is 0.60 or more and 1.40 or less.

**7.** The use according to claim 5 or 6, wherein
a content of a softener in the material for the pressure-sensitive adhesive is 8% by mass or less based on a total weight of the material for the pressure-sensitive adhesive.

**8.** The use according to any one of claims 5 to 7, wherein
a ratio of an amount of the composition E to be blended to an amount of the composition for a pressure-sensitive adhesive of a multilayered film to be blended (blending weight ratio) is 0.45 or more and 6.50 or less.

**9.** The use according to any one of claims 5 to 8, wherein
a ratio of a total weight of a thermoplastic elastomer in the material for a pressure-sensitive adhesive is 30% by mass or more and 80% by mass or less.

**10.** The use according to any one of claims 5 to 9, wherein
the pressure-sensitive adhesive is formed by a method comprising:

an extrusion step of together extruding the composition for a pressure-sensitive adhesive of a multilayered film in a particulate form having an integrated form of at least one of thermoplastic elastomer A and at least one of tackifier B and composition E in a particulate form having at least type of thermoplastic elastomer D by using an extruder to obtain a pressure-sensitive adhesive, wherein
in the extrusion step,
a tack strength of the pressure-sensitive adhesive having ratio y is larger than that of the composition for a pressure-sensitive adhesive of a multilayered film having ratio α and larger than that of the composition E having ratio β, wherein
y represents a ratio of a total amount of thermoplastic elastomer to a total amount of thermoplastic elastomer and tackifier in the pressure-sensitive adhesive;
α represents a ratio of a total amount of thermoplastic elastomer to a total amount of thermoplastic elastomer and tackifier in the composition for a pressure-sensitive adhesive of a multilayered film; and
β represents a ratio of a total amount of thermoplastic elastomer to a total amount of thermoplastic elastomer and tackifier in the composition E.

**11.** The use according to claim 10, wherein
the method for forming the pressure-sensitive adhesive comprises a dry blending step of dry-blending the composition for a pressure-sensitive adhesive of a multilayered film and the composition E before the extrusion step to prepare material F for a pressure-sensitive adhesive.

**12.** The use according to claim 10 or 11, wherein
the method for forming the pressure-sensitive adhesive satisfies following (1) and/or (2):

(1) a ratio of average particle weight We of the composition E to average particle weight Wc of the composition for a pressure-sensitive adhesive of a multilayered film is 0.60 or more and 1.40 or less; and
(2) a ratio of average particle major axis Le of the composition E to average particle major axis Lc of the composition for a pressure-sensitive adhesive of a multilayered film is 0.60 or more and 1.40 or less, and a ratio of average particle minor axis le of the composition E to average particle minor axis lc of the composition for a pressure-sensitive adhesive of a multilayered film is 0.60 or more and 1.40 or less.

**Patentansprüche**

1. Verwendung einer Zusammensetzung in teilchenförmiger Form für einen Haftklebstoff einer mehrschichtigen Folie für wiederverschließbare Verpackungen, umfassend:

   eine integrierte Form von mindestens einem thermoplastischen Elastomer A und mindestens einem Klebrigmacher B, wobei
   die Zusammensetzung zur Verwendung in einem Haftklebstoff die folgende Bedingung (1) erfüllt:

   (1) das Verhältnis des Gesamtgewichts des Klebrigmachers zu dem Gesamtgewicht des thermoplastischen Elastomers in der Zusammensetzung beträgt mehr als 1,5 und 3,0 oder weniger;

   wobei der Gehalt einer vinylaromatischen Monomereinheit in dem thermoplastischen Elastomer A 10 Massen-% oder mehr und 40 Massen-% oder weniger ist, und
   das thermoplastische Elastomer A einen Polymerblock (A), der hauptsächlich eine vinylaromatische Monomereinheit aufweist, und einen Polymerblock (B), der hauptsächlich eine konjugierte Dienmonomereinheit aufweist, umfasst,
   wobei die mehrschichtige Folie eine Haftklebstoffschicht in einer anderen Schicht als einer äußersten Schicht enthält, und
   die mehrschichtige Folie drei oder mehr Schichten aufweist.

2. Verwendung nach Anspruch 1, wobei

   das thermoplastische Elastomer A in einem Verhältnis von 10 Massen-% oder mehr und 90 Massen-% oder weniger
   ein Blockcopolymer (C) umfasst, welches einen Polymerblock (A), der hauptsächlich eine vinylaromatische Monomereinheit aufweist, und einen Polymerblock (B), der hauptsächlich eine konjugierte Dienmonomereinheit aufweist, umfasst, wobei die Anzahl des Polymerblocks (A) 1 ist.

3. Verwendung nach Anspruch 1 oder 2, wobei
   der Hydrierungs-Prozentsatz H, bezogen auf die Gesamtmenge der ungesättigten Doppelbindungen, die von einer konjugierten Dienverbindung in dem Polymerblock (B) stammen, 20 Mol-% oder mehr und 80 Mol-% oder weniger ist.

4. Verwendung nach einem der Ansprüche 1 bis 3, wobei
   der Klebrigmacher B
   mindestens einer ist, ausgewählt aus der Gruppe bestehend aus einem aromatischen modifizierten Terpenharz, einem Terpen-Phenol-Harz, einem Terpenharz, einem aliphatischen Klebrigmacher, einem aromatischen Erdölkohlenwasserstoffharz, einem C5/C9-Copolymerharz und hydrierten Derivaten davon.

5. Verwendung nach einem der Ansprüche 1 bis 4, wobei die Zusammensetzung in einem Material zur Verwendung in einem Haftklebstoff enthalten ist, wobei das Material umfasst:

   Zusammensetzung E in teilchenförmiger Form, die mindestens ein thermoplastisches Elastomer D enthält, wobei
   die Klebekraft des Materials für einen Haftklebstoff mit einem Verhältnis x größer ist als die der Zusammensetzung für einen Haftklebstoff einer mehrschichtigen Folie mit einem Verhältnis $\alpha$ und größer als die der Zusammensetzung E mit einem Verhältnis $\beta$, wobei
   x das Verhältnis der Gesamtmenge des thermoplastischen Elastomers zur Gesamtmenge des thermoplastischen Elastomers und des Klebrigmachers in dem Material für einen Haftklebstoff darstellt;
   $\alpha$ das Verhältnis zwischen der Gesamtmenge des thermoplastischen Elastomers und der Gesamtmenge des thermoplastischen Elastomers und des Klebrigmachers in der Zusammensetzung für einen Haftklebstoff einer mehrschichtigen Folie darstellt; und
   $\beta$ das Verhältnis zwischen der Gesamtmenge des thermoplastischen Elastomers und der Gesamtmenge des thermoplastischen Elastomers und des Klebrigmachers in der Zusammensetzung E darstellt, und
   das Material für einen Haftklebstoff den folgenden Ausdruck (1) erfüllt:

   $$\alpha < x < \beta \text{ oder } \beta < x < \alpha \ (1).$$

**6.** Verwendung nach Anspruch 5, wobei
das Material für einen Haftklebstoff die folgenden Punkte (1) und/oder (2) erfüllt:

(1) das Verhältnis des durchschnittlichen Teilchengewichts We der Zusammensetzung E zum durchschnittlichen Teilchengewicht Wc der Zusammensetzung für einen Haftklebstoff einer mehrschichtigen Folie ist 0,60 oder mehr und 1,40 oder weniger; und
(2) das Verhältnis der durchschnittlichen Teilchen-Hauptachse Le der Zusammensetzung E zur durchschnittlichen Teilchen-Hauptachse Lc der Zusammensetzung für einen Haftklebstoff einer mehrschichtigen Folie ist 0,60 oder mehr und 1,40 oder weniger, und das Verhältnis der durchschnittlichen Teilchen-Nebenachse le der Zusammensetzung E zur durchschnittlichen Teilchen-Nebenachse lc der Zusammensetzung für einen Haftklebstoff einer mehrschichtigen Folie ist 0,60 oder mehr und 1,40 oder weniger.

**7.** Verwendung nach Anspruch 5 oder 6, wobei
der Gehalt eines Weichmachers in dem Material für den Haftklebstoff 8 Massen-% oder weniger beträgt, bezogen auf das Gesamtgewicht des Materials für den Haftklebstoff.

**8.** Verwendung nach einem der Ansprüche 5 bis 7, wobei
das Verhältnis der Menge der zuzumischenden Zusammensetzung E zu der Menge der zuzumischenden Zusammensetzung für einen Haftklebstoff einer mehrschichtigen Folie (Mischgewichtsverhältnis) 0,45 oder mehr und 6,50 oder weniger beträgt.

**9.** Verwendung nach einem der Ansprüche 5 bis 8, wobei
das Verhältnis des Gesamtgewichts des thermoplastischen Elastomers in dem Material für einen Haftklebstoff 30 Massen-% oder mehr und 80 Massen-% oder weniger ist.

**10.** Verwendung nach einem der Ansprüche 5 bis 9, wobei
der Haftklebstoff durch ein Verfahren gebildet wird, umfassend:

einen Extrusionsschritt, bei dem die Zusammensetzung für einen Haftklebstoff einer mehrschichtigen Folie in einer teilchenförmigen Form mit einer integrierten Form von mindestens einem thermoplastischen Elastomer A und mindestens einem Klebrigmacher B und die Zusammensetzung E in einer teilchenförmigen Form mit mindestens einem Typ von thermoplastischem Elastomer D unter Verwendung eines Extruders zusammen extrudiert werden, um einen Haftklebstoff zu erhalten, wobei
in dem Extrusionsschritt,
die Klebekraft des Haftklebstoffs mit dem Verhältnis y größer ist als die der Zusammensetzung für einen Haftklebstoff einer mehrschichtigen Folie mit dem Verhältnis α und größer ist als die der Zusammensetzung E mit dem Verhältnis β , wobei
y das Verhältnis der Gesamtmenge des thermoplastischen Elastomers zur Gesamtmenge des thermoplastischen Elastomers und des Klebrigmachers in dem Haftklebstoff darstellt;
α das Verhältnis der Gesamtmenge des thermoplastischen Elastomers zur Gesamtmenge des thermoplastischen Elastomers und des Klebrigmachers in der Zusammensetzung für einen Haftklebstoff einer mehrschichtigen Folie darstellt; und
β das Verhältnis der Gesamtmenge des thermoplastischen Elastomers zur Gesamtmenge des thermoplastischen Elastomers und des Klebrigmachers in der Zusammensetzung E darstellt.

**11.** Verwendung nach Anspruch 10, wobei
das Verfahren zur Bildung des Haftklebstoffs einen Trockenmischschritt beinhaltet, bei dem die Zusammensetzung für einen Haftklebstoff einer mehrschichtigen Folie und die Zusammensetzung E vor dem Extrusionsschritt trocken gemischt werden, um Material F für einen Haftklebstoff herzustellen.

**12.** Verwendung nach Anspruch 10 oder 11, wobei
das Verfahren zur Bildung des Haftklebstoffs die folgenden Punkte (1) und/oder (2) erfüllt:

(1) das Verhältnis des durchschnittlichen Teilchengewichts We der Zusammensetzung E zum durchschnittlichen Teilchengewicht Wc der Zusammensetzung für einen Haftklebstoff einer mehrschichtigen Folie beträgt 0,60 oder mehr und 1,40 oder weniger; und
(2) das Verhältnis der durchschnittlichen Teilchen-Hauptachse Le der Zusammensetzung E zur durchschnittlichen Teilchen-Hauptachse Lc der Zusammensetzung für einen Haftklebstoff einer mehrschichtigen Folie beträgt 0,60 oder mehr und 1,40 oder weniger, und das Verhältnis der durchschnittlichen Teilchen-Nebenachse le der Zusammensetzung E zur durchschnittlichen Teilchen-Nebenachse lc der Zusammensetzung für einen Haftklebstoff einer mehrschichtigen Folie beträgt 0,60 oder mehr und 1,40 oder weniger.

**Revendications**

1. Utilisation d'une composition sous forme particulaire pour un adhésif sensible à la pression d'un film multicouche pour refermer hermétiquement un emballage, comprenant :

   une forme intégrée d'au moins un de l'élastomère thermoplastique A et au moins un de l'agent tackifiant B, dans laquelle la composition pour une utilisation dans un adhésif sensible à la pression satisfait le (1) suivant :

   (1) un rapport d'un poids total d'un agent tackifiant à un poids total d'un élastomère thermoplastique dans la composition est supérieur à 1,5 et de 3,0 ou moins ;

   une teneur d'un motif monomère aromatique vinylique dans l'élastomère thermoplastique A est de 10 % en masse ou plus et de 40 % en masse ou moins, et
   l'élastomère thermoplastique A comprend une séquence polymère (A) comprenant principalement un motif monomère aromatique vinylique et une séquence polymère (B) comprenant principalement un motif monomère diène conjugué,
   dans laquelle le film multicouche comporte une couche d'adhésif sensible à la pression dans une couche autre qu'une couche la plus externe, et
   le film multicouche comporte trois couches ou plus.

2. Utilisation selon la revendication 1, dans laquelle

   l'élastomère thermoplastique A comprend, à un rapport de 10 % en masse ou plus et de 90 % en masse ou moins, un copolymère séquencé (C) comprenant une séquence polymère (A) comprenant principalement un motif monomère aromatique vinylique et une séquence polymère (B) comprenant principalement un motif monomère diène conjugué, dans laquelle un nombre de la séquence polymère (A) est de 1.

3. Utilisation selon la revendication 1 ou 2, dans laquelle
   le pourcentage H d'hydrogénation sur la base d'une quantité totale de doubles liaisons insaturées dérivées d'un composé diène conjugué dans la séquence polymère (B) est de 20 % en mole ou plus et de 80 % en mole ou moins.

4. Utilisation selon l'une quelconque des revendications 1 à 3, dans laquelle
   l'agent tackifiant B est
   au moins un choisi dans le groupe constitué d'une résine terpène modifiée aromatique, d'une résine terpène-phénol, d'une résine terpène, d'un agent tackifiant aliphatique, d'une résine hydrocarbonée de pétrole aromatique, d'une résine de copolymère C5/C9, et de dérivés hydrogénés de ceux-ci.

5. Utilisation selon l'une quelconque des revendications 1 à 4, dans laquelle la composition est incluse dans un matériau pour une utilisation dans un adhésif sensible à la pression, ledit matériau comprenant :

   une composition E sous forme particulaire comprenant au moins un de l'élastomère thermoplastique D, dans laquelle une résistance à l'état collant du matériau pour un adhésif sensible à la pression ayant un rapport x est supérieure à celle de la composition pour un adhésif sensible à la pression d'un film multicouche ayant un rapport $\alpha$ et supérieure à celle de la composition E ayant un rapport $\beta$, dans laquelle x représente un rapport d'une quantité totale d'un élastomère thermoplastique à une quantité totale d'un élastomère thermoplastique et d'un agent tackifiant dans le matériau pour un adhésif sensible à la pression ;
   $\alpha$ représente un rapport d'une quantité totale d'un élastomère thermoplastique à une quantité totale d'un élastomère thermoplastique et d'un agent tackifiant dans la composition pour un adhésif sensible à la pression d'un film multicouche ; et
   $\beta$ représente un rapport d'une quantité totale d'un élastomère thermoplastique à une quantité totale d'un élastomère thermoplastique et d'un agent tackifiant dans la composition E, et
   le matériau pour un adhésif sensible à la pression satisfait l'expression (1) suivante :

$$\alpha < x < \beta \text{ ou } \beta < x < \alpha \quad (1).$$

**6.** Utilisation selon la revendication 5, dans laquelle le matériau pour un adhésif sensible à la pression satisfait le (1) et/ou (2) suivant :

(1) un rapport du poids moyen des particules We de la composition E au poids moyen des particules Wc de la composition pour un adhésif sensible à la pression d'un film multicouche est de 0,60 ou plus et de 1,40 ou moins ; et

(2) un rapport du grand axe moyen des particules Le de la composition E au grand axe moyen des particules Le de la composition pour un adhésif sensible à la pression d'un film multicouche est de 0,60 ou plus et de 1,40 ou moins, et un rapport du petit axe moyen des particules le de la composition E au petit axe moyen des particules le de la composition pour un adhésif sensible à la pression d'un film multicouche est de 0,60 ou plus et de 1,40 ou moins.

**7.** Utilisation selon la revendication 5 ou 6, dans laquelle une teneur d'un plastifiant dans le matériau pour l'adhésif sensible à la pression est de 8 % en masse ou moins sur la base d'un poids total du matériau pour l'adhésif sensible à la pression.

**8.** Utilisation selon l'une quelconque des revendications 5 à 7, dans laquelle
un rapport d'une quantité de la composition E à mélanger à une quantité de la composition pour un adhésif sensible à la pression d'un film multicouche à mélanger (rapport de poids de mélange) est de 0,45 ou plus et de 6,50 ou moins.

**9.** Utilisation selon l'une quelconque des revendications 5 à 8, dans laquelle
un rapport d'un poids total d'un élastomère thermoplastique dans le matériau pour un adhésif sensible à la pression est de 30 % en masse ou plus et de 80 % en masse ou moins.

**10.** Utilisation selon l'une quelconque des revendications 5 à 9, dans laquelle
l'adhésif sensible à la pression est formé par un procédé comprenant :

une étape d'extrusion consistant à extruder ensemble la composition pour un adhésif sensible à la pression d'un film multicouche sous forme particulaire ayant une forme intégrée d'au moins un de l'élastomère thermoplastique A et au moins un de l'agent tackifiant B et la composition E sous forme particulaire ayant au moins un type d'élastomère thermoplastique D en utilisant une extrudeuse pour obtenir un adhésif sensible à la pression, dans laquelle
dans l'étape d'extrusion,
une résistance à l'état collant de l'adhésif sensible à la pression ayant un rapport y est supérieure à celle de la composition pour un adhésif sensible à la pression d'un film multicouche ayant un rapport $\alpha$ et supérieure à celle de la composition E ayant un rapport $\beta$, dans laquelle
y représente un rapport d'une quantité totale d'élastomère thermoplastique à une quantité totale d'élastomère thermoplastique et d'agent tackifiant dans l'adhésif sensible à la pression ;
$\alpha$ représente un rapport d'une quantité totale d'élastomère thermoplastique à une quantité totale d'élastomère thermoplastique et d'agent tackifiant dans la composition pour un adhésif sensible à la pression d'un film multicouche ; et
$\beta$ représente un rapport d'une quantité totale d'élastomère thermoplastique à une quantité totale d'élastomère thermoplastique et d'agent tackifiant dans la composition E.

**11.** Utilisation selon la revendication 10, dans laquelle
le procédé de formation de l'adhésif sensible à la pression comprend une étape de mélange à sec consistant à mélanger à sec la composition pour un adhésif sensible à la pression d'un film multicouche et la composition E avant l'étape d'extrusion pour préparer le matériau F pour un adhésif sensible à la pression.

**12.** Utilisation selon la revendication 10 ou 11, dans laquelle le procédé de formation de l'adhésif sensible à la pression satisfait le (1) et/ou (2) suivant :

(1) un rapport du poids moyen des particules We de la composition E au poids moyen des particules Wc de la composition pour un adhésif sensible à la pression d'un film multicouche est de 0,60 ou plus et de 1,40 ou moins ; et

(2) un rapport du grand axe moyen des particules Le de la composition E au grand axe moyen des particules Le de la composition pour un adhésif sensible à la pression d'un film multicouche est de 0,60 ou plus et de 1,40 ou moins, et un rapport du petit axe moyen des particules le de la composition E au petit axe moyen des particules le de la composition pour un adhésif sensible à la pression d'un film multicouche est de 0,60 ou plus et de 1,40 ou moins.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015529715 A
- JP H11323295 A
- JP 3619286 B
- JP 4317979 B
- JP 46032415 A
- JP 49036975 A
- JP 48002423 A
- JP 48004106 A
- JP 56028925 A
- JP 59166518 A
- JP 60186577 A
- JP 428704 A
- JP 436636 A
- JP 63004841 A
- JP 1037970 A
- JP 1053851 A
- JP 2009041 A
- JP 8109219 A